# EUROPÄISCHE PATENTSCHRIFT

(11) **EP 1 732 391 B1**
(45) Veröffentlichungstag und Bekanntmachung des Hinweises auf die Patenterteilung: **09.09.2009**
(21) Anmeldenummer: 05716020.2
(22) Anmeldetag: 12.03.2005
(51) Int. Cl.: A01N 47/36, A01N 25/32

(54) **HERBIZID-SAFENER-KOMBINATION**
HERBICIDE-SAFENER COMBINATION
ASSOCIATION D'HERBICIDE ET DE PRODUIT PHYTOPROTECTEUR

(30) Priorität: 27.03.2004 DE 102004015140; 30.06.2004 DE 102004031345
(43) Veröffentlichungstag der Anmeldung: 20.12.2006
(73) Patentinhaber: Bayer CropScience AG, 40789 Monheim (DE)
(72) Erfinder: HILLS, Martin, 65510 Idstein (DE); ROSINGER, Christopher, 65719 Hofheim (DE); HACKER, Erwin, 65239 Hochheim (DE); KRÄHMER, Hansjörg, 65719 Hofheim (DE); BICKERS, Udo, 49835 Wietmarschen (DE); ZIEMER, Frank, 65830 Kriftel (DE); WALDRAFF, Christian, 61118 Bad Vilbel (DE); DIETRICH, Hansjörg, 65719 Hofheim (DE); WILLMS, Lothar, 65719 Hofheim (DE); FEUCHT, Dieter, 65760 Eschborn (DE); MÜLLER, Klaus-Helmut, 40593 Düsseldorf (DE); PHILIPP, Ulrich, Lees Summit, MO 64064 (US)
(86) Internationale Anmeldenummer: PCT/EP2005/002672
(87) Internationale Veröffentlichungsnummer: WO 2005/092103

(56) Entgegenhaltungen:
- EP-A- 1 008 297
- DE-A1- 4 323 122
- US-A- 5 476 936

## Beschreibung

Die Erfindung betrifft das technische Gebiet der Pflanzenschutzmittel, insbesondere Herbizid-Safener-Kombinationen, die hervorragend für den Einsatz gegen Schadpflanzen in Nutzpflanzenkulturen geeignet sind.

Aus US 5,476,936 sind herbizide Wirkstoffe bekannt, die ein breites Spektrum von Unkräutern bekämpfen. Allerdings sind diese Wirkstoffe zum Teil nicht voll verträglich mit einigen wichtigen Kulturpflanzen wie Getreide. Sie können deshalb in manchen Kulturen nicht so eingesetzt werden, dass die erwünschte breite herbizide Wirksamkeit gegenüber Schadpflanzen gewährleistet ist.

Aufgabe der vorliegenden Erfindung war es, herbizide Mittel zu finden, in welchen die Selektivität der oben genannten Herbizide gegenüber wichtigen Kulturpflanzen erhöht ist. Diese Aufgabe wird überraschend gelöst durch die Herbizid-Safener-Kombination der vorliegenden Erfindung.

Gegenstand der vorliegenden Erfindung ist daher eine Herbizid-Safener-Kombination, enthaltend
(A) eine oder mehrere Verbindungen der Formel (I) oder deren Salze 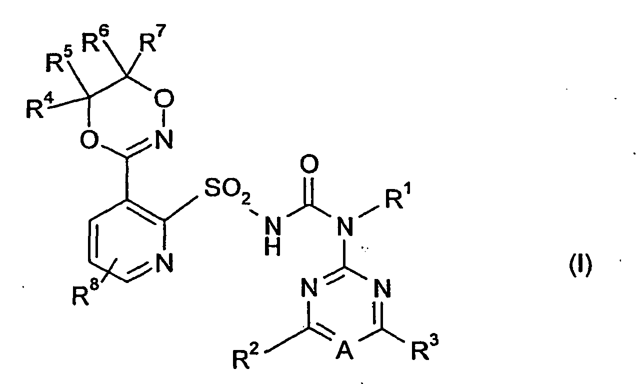 worin
   - A: für Stickstoff oder eine CR¹¹-Gruppierung steht,
   wobei
   R¹¹ für Wasserstoff, Alkyl, Halogen und Haloalkyl steht,
   - R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
   - R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
   - R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
   - R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxy-carbonyl, Alkylaminocarbonyl mit jeweils 1 bis 3 Kohlenstoffatomen stehen,
   - R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
   wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können; und
(B) einen oder mehrere Safener.

Die erfindungsgemäßen Herbizid-Safener-Kombinationen können zusätzliche weitere Komponenten enthalten, z. B. Pflanzenschutzmittelwirkstoffe anderer Art und/oder im Pflanzenschutz übliche Zusatzstoffe und/oder Formulierungshilfsmittel, oder zusammen mit diesen eingesetzt werden.

Die Herbizide (A) und die Safener (B) können auf bekannte Weise angewendet werden, z.B. gemeinsam (beispielsweise als Co-Formulierung oder als TankMischung) oder auch zeitlich versetzt (Splitting), z.B. auf die Pflanzen, Pflanzenteile, Pflanzensamen oder die Fläche auf der die Pflanzen wachsen. Möglich ist z.B. die Anwendung der Einzelwirkstoffe oder der Herbizid-Safener-Kombination in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Möglich ist auch die Anwendung der Einzelwirkstoffe oder der Herbizid-Safener-Kombination zur Saatgutbehandlung.

Die genannte Formel (I) umfaßt alle Stereoisomeren und deren Gemische, insbesondere auch racemische Gemische, und - soweit Enantiomere möglich sind - das jeweils biologisch wirksame Enantiomere.

Die Verbindungen der Formel (I) und deren Salze sind bekannt, ebenso wie deren Herstellung, z.B. aus US 5,476,936, die hiermit in die vorliegende Beschreibung aufgenommen wird.

Als Herbizid (A) bevorzugt sind Verbindungen der Formel (I) und deren Salze,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

Als Herbizid (A) ebenfalls bevorzugt sind Salze, die man aus Verbindungen der Formel (I) und Basen, wie z.B. Natrium-, Kalium- oder Calcium-hydroxid, -hydrid, -amid und -carbonat, Natrium- oder Kalium-C₁-C₄-alkanolaten, Ammoniak, C₁-C₄-Alkylaminen, Di-(C₁-C₄-alkyl)-aminen oder Tri-(C₁-C₄-alkyl)-aminen, nach üblichen Verfahren erhält.

Als Herbizid (A) besonders bevorzugt sind Verbindungen der Formel (I) und deren Salze,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise Wasserstoff.

Als Herbizid (A) besonders bevorzugt sind Verbindungen der Formel (I) und deren Salze, insbesondere deren Alkalimetallsalze,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Als Herbizid (A) ebenfalls besondres bevorzugt sind Verbindungen der Formel (I) und deren Salze, insbesondere deren Alkalimetallsalze,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Aus den Verbindungen der allgemeinen Formel (I) können gegebenenfalls Salze hergestellt werden, z.B. Metallsalze wie Alkali (z.B. Na, K) Salze oder Erdalkali (z.B. Ca, Mg) -Salze oder Ammonium- oder Aminsalze. Man erhält solche Salze in einfacher Weise nach üblichen Salzbildungsmethoden, beispielsweise durch Lösen oder Dispergieren einer Verbindung der Formel (I) in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.

Beispiele für als Herbizid (A) verwendete Verbindungen sind in der nachfolgenden Tabelle 1 genannt, worin folgende Abkürzungen verwendet werden:
Smp.: = Schmelzpunkt
Zers. oder Z. = unter Zersetzung
- (+) =: Der angegebene Schmelzpunkt (Smp.) bezieht sich jeweils auf das entsprechende Natriumsalz, d.h. die entsprechende Verbindung, worin der Wasserstoff der -SO₂-NH-Gruppe durch Natrium ersetzt ist.

**Tabelle 1: Beispiele für Verbindungen der Formel (I) mit**

| R⁴ = R⁵ = R⁶ = R⁷ = R⁸= H : | | | | | |
|---|---|---|---|---|---|
| Bsp.- Nr. | R¹ | A | R² | R³ | Smp. (°C) |
| I-1 | H | CH | OCH₃ | OC₂H₅ | 154 |
| I-2 | H | CH | OCH₃ | CH₃ | |
| I-3 | H | CH | OHC₃ | CH₃ | 180-181⁽⁺⁾ |
| I-4 | H | CH | OCH₃ | C₂H₅ | |
| I-5 | H | CH | OCH₃ | CF₃ | |
| I-6 | H | CH | OCH₃ | OCF₂H | |
| I-7 | H | CH | OCH₃ | NHCH₃ | |
| I-8 | H | CH | OCH₃ | N(CH₃)₂ | 199.5 |
| I-9 | H | CH | OCH₃ | Cl | 110-111 |
| I-10 | H | CH | OCH₃ | Cl | 175-178⁽⁺⁾ |
| I-11 | H | CH | OCH₃ | OCH₃ | 167-168 |
| I-12 | H | CH | OCH₃ | OCH₃ | 171-172⁽⁺⁾ |
| I-13 | H | CH | OC₂H₅ | OC₂H₅ | |
| I-14 | H | CH | OC₂H₅ | OC₂H₅ | 152-154⁽⁺⁾ |
| I-15 | H | CH | OC₂H₅ | CH₃ | |
| I-16 | H | CH | OC₂H₅ | C₂H₅ | |
| I-17 | H | CH | OC₂H₅ | CF₃ | |
| I-18 | H | CH | OC₂H₅ | OCF₂H | |
| I-19 | H | CH | OC₂H₅ | NHCH₃ | |
| I-20 | H | CH | OC₂H₅ | N(CH₃)₂ | |
| I-21 | H | CH | OC₂H₅ | Cl | 158-159 |
| I-22 | H | CH | OC₂H₅ | Cl | 213⁽⁺⁾ |
| I-23 | H | CH | CH₃ | CH₃ | 153 |
| I-24 | H | CH | CH₃ | C₂H₅ | |
| I-25 | H | CH | CH₃ | CF₃ | |
| I-26 | H | CH | CH₃ | OCF₂H | |
| 1-27 | H | CH | CH₃ | NHCH₃ | |
| I-28 | H | CH | CH₃ | N(CH₃)₂ | |
| I-29 | H | CH | CH₃ | Cl | 108-109 |
| I-30 | H | CH | CH₃ | Cl | >300⁽⁺⁾ |
| I-31 | H | CH | C₂H₅ | C₂H₅ | |
| I-32 | H | CH | C₂H₅ | CF₃ | |
| I-33 | H | CH | C₂H₅ | OCF₂H | |
| I-34 | H | CH | C₂H₅ | NHCH₃ | |
| I-35 | H | CH | C₂H₅ | Cl | |
| I-36 | H | CH | CF₃ | CF₃ | |
| I-37 | H | CH | CF₃ | OCF₂H | |
| I-38 | H | CH | CF₃ | NHCH₃ | |
| I-39 | H | CH | CF₃ | N(CH₃)₂ | |
| I-40 | H | CH | CF₃ | Cl | |
| I-41 | H | CH | OCF₂H | OCF₂H | |
| I-42 | H | CH | OCF₂H | NHCH₃ | |
| I-43 | H | CH | OCF₂H | N(CH₃)₂ | |
| I-44 | H | CH | OCF₂H | Cl | |
| I-45 | H | CH | NHCH₃ | NHCH₃ | |
| I-46 | H | CH | NHCH₃ | N(CH₃)₂ | |
| I-47 | H | CH | NHCH₃ | Cl | |
| I-48 | H | CH | N(CH₃)₂ | N(CH₃)₂ | |
| I-49 | H | CH | N(CH₃)₂ | Cl | |
| I-50 | H | CH | Cl | Cl | |
| I-51 | H | N | OCH₃ | OCH₃ | 255 |
| I-52 | H | N | OCH₃ | OCH₃ | 159-162⁽⁺⁾ |
| I-53 | H | N | OCH₃ | OC₂H₅ | |
| I-54 | H | N | OCH₃ | CH₃ | |
| I-55 | H | N | OCH₃ | C₂H₅ | |
| I-56 | H | N | OCH₃ | CF₃ | |
| I-57 | H | N | OCH₃ | OCF₂H | |
| I-58 | H | N | OCH₃ | NHCH₃ | |
| I-59 | H | N | OCH₃ | N(CH₃)₂ | |
| I-60 | H | N | OCH₃ | N(CH₃)₂ | 156⁽⁺⁾ |
| I-61 | H | N | OCH₃ | Cl | |
| I-62 | H | N | OC₂H₅ | OC₂H₅ | |
| I-63 | H | N | OC₂H₅ | CH₃ | |
| I-64 | H | N | OC₂H₅ | C₂H₅ | |
| I-65 | H | N | OC₂H₅ | CF₃ | |
| I-66 | H | N | OC₂H₅ | OCF₂H | |
| I-67 | H | N | OC₂H₅ | NHCH₃ | |
| I-68 | H | N | OC₂H₅ | N(CH₃)₂ | |
| I-69 | H | N | OC₂H₅ | Cl | |
| I-70 | H | N | OC₂H₅ | Cl | 213⁽⁺⁾ |
| I-71 | H | N | CH₃ | CH₃ | |
| I-72 | H | N | CH₃ | C₂H₅ | |
| I-73 | H | N | CH₃ | CF₃ | |
| I-74 | H | N | CH₃ | OCF₂H | |
| I-75 | H | N | CH₃ | NHCH₃ | |
| I-76 | H | N | CH₃ | N(CH₃)₂ | |
| I-77 | H | N | CH₃ | Cl | |
| I-78 | H | N | C₂H₅ | C₂H₅ | |
| I-79 | H | N | C₂H₅ | CF₃ | |
| I-80 | H | N | C₂H₅ | OCF₂H | |
| I-81 | H | N | C₂H₅ | NHCH₃ | |
| I-82 | H | N | C₂H₅ | Cl | |
| I-83 | H | N | CF₃ | CF₃ | |
| I-84 | H | N | CF₃ | OCF₂H | |
| I-85 | H | N | CF₃ | NHCH₃ | |
| I-86 | H | N | CF₃ | N(CH₃)₂ | |
| I-87 | H | N | CF₃ | Cl | |
| I-88 | H | N | OCF₂H | OCF₂H | |
| I-89 | H | N | OCF₂H | NHCH₃ | |
| I-90 | H | N | OCF₂H | N(CH₃)₂ | |
| I-91 | H | N | OCF₂H | Cl | |
| I-92 | H | N | NHCH₃ | NHCH₃ | |
| I-93 | H | N | NHCH₃ | N(CH₃)₂ | |
| I-94 | H | N | NHCH₃ | Cl | |
| I-95 | H | N | N(CH₃)₂ | N(CH₃)₂ | |
| I-96 | H | N | N(CH₃)₂ | Cl | |
| I-97 | H | N | Cl | Cl | |
| I-98 | CH₃ | N | OCH₃ | OCH₃ | |
| I-99 | CH₃ | N | OCH₃ | OC₂H₅ | |
| I-100 | CH₃ | N | OCH₃ | CH₃ | |
| I-101 | CH₃ | N | OCH₃ | C₂H₅ | |
| I-102 | CH₃ | N | OCH₃ | CF₃ | |
| I-103 | CH₃ | N | OCH₃ | OCF₂H | |
| I-104 | CH₃ | N | OCH₃ | NHCH₃ | |
| I-105 | CH₃ | N | OCH₃ | N(CH₃)₂ | |
| I-106 | CH₃ | N | OCH₃ | Cl | |
| I-107 | CH₃ | N | OC₂H₅ | OC₂H₅ | |
| I-108 | CH₃ | N | OC₂H₅ | CH₃ | |
| I-109 | CH₃ | N | OC₂H₅ | C₂H₅ | |
| I-110 | CH₃ | N | OC₂H₅ | CF₃ | |
| I-111 | CH₃ | N | OC₂H₅ | OCF₂H | |
| I-112 | CH₃ | N | OC₂H₅ | NHCH₃ | |
| I-113 | CH₃ | N | OC₂H₅ | N(CH₃)₂ | |
| I-114 | CH₃ | N | OC₂H₅ | Cl | |
| I-115 | CH₃ | N | CH₃ | CH₃ | |
| I-116 | CH₃ | N | CH₃ | C₂H₅ | |
| I-117 | CH₃ | N | CH₃ | CF₃ | |
| I-118 | CH₃ | N | CH₃ | OCF₂H | |
| I-119 | CH₃ | N | CH₃ | NHCH₃ | |
| I-120 | CH₃ | N | CH₃ | N(CH₃)₂ | |
| I-121 | CH₃ | N | CH₃ | Cl | |
| I-122 | CH₃ | N | C₂H₅ | C₂H₅ | |
| I-123 | CH₃ | N | C₂H₅ | CF₃ | |
| I-124 | CH₃ | N | C₂H₅ | OCF₂H | |
| I-125 | CH₃ | N | C₂H₅ | NHCH₃ | |
| I-126 | CH₃ | N | C₂H₅ | Cl | |
| I-127 | CH₃ | N | CF₃ | CF₃ | |
| I-128 | CH₃ | N | CF₃ | OCF₂H | |
| I-129 | CH₃ | N | CF₃ | NHCH₃ | |
| I-130 | CH₃ | N | CF₃ | N(CH₃)₂ | |
| I-131 | CH₃ | N | CF₃ | Cl | |
| I-132 | CH₃ | N | OCF₂H | OCF₂H | |
| I-133 | CH₃ | N | OCF₂H | NHCH₃ | |
| I-134 | CH₃ | N | OCF₂H | N(CH₃)₂ | |
| I-135 | CH₃ | N | OCF₂H | Cl | |
| I-136 | CH₃ | N | NHCH₃ | NHCH₃ | |
| I-137 | CH₃ | N | NHCH₃ | N(CH₃)₂ | |
| I-138 | CH₃ | N | NHCH₃ | Cl | |
| I-139 | CH₃ | N | N(CH₃)₂ | N(CH₃)₂ | |
| I-140 | CH₃ | N | N(CH₃)₂ | Cl | |
| I-141 | CH₃ | N | Cl | Cl | |
| I-142 | H | N | N(CH₃)₂ | OCH₂CF₃ | 158 |
| I-143 | H | CH | Cl | OCH₂CF₃ | 204-205 |
| I-144 | H | CH | Cl | OCH₂CF₃ | |
| I-145 | H | CH | Cl | OCH₂CF₃ | 207⁽⁺⁾ |

Die Herbizide (A) hemmen das Enzym Acetolactatsynthase (ALS) und damit die Proteinsynthese in Pflanzen. Die Aufwandmenge der Herbizide (A) kann mit den äußeren Bedingungen wie Temperatur, Feuchtigkeit, der Art des verwendeten Herbizids in einem weiten Bereich variieren, beispielsweise zwischen 0,001 g und 500 g AS/ha (AS/ha bedeutet dabei im folgenden "Aktivsubstanz pro Hektar" = bezogen auf 100%igen Wirkstoff). Bei Anwendungen mit Aufwandmengen von 0,01 g bis 200 g AS/ha der Herbizide (A), vorzugsweise der Verbindungen I-1 bis I-145, wird im Vor- und Nachauflaufverfahren ein relativ breites Spektrum an Schadpflanzen bekämpft, z.B. annuellen und perennierenden mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,001 g bis 100 g AS/ha, vorzugsweise 0,005 g bis 50 g AS/ha, besonders bevorzugt 0,01 g bis 9 g AS/ha.

Die Herbizide (A) sind zur Bekämpfung von Schadpflanzen, z.B. in Pflanzenkulturen geeignet, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblume und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen. Für die Anwendung der erfindungsgemäßen Herbizid-Safener-Kombinationen (A)+(B) sind diese Kulturen ebenfalls bevorzugt, besonders bevorzugt ist der Einsatz in Getreide (z.B. Weizen, Gerste, Roggen, Hafer), Reis, Mais, Hirse, Zuckerrübe, Zuckerrohr, Sonnenblume, Raps und Baumwolle. Die Herbizid-Safener-Kombinationen (A)+(B) sind auch einsetzbar in toleranten und nicht toleranten Mutantenkulturen und toleranten und nicht toleranten transgenen Kulturen, vorzugsweise von Mais, Reis, Getreide, Raps und Soja, z.B. solche die gegen Imidazolinon-Herbizide, Atrazin, Glufosinate oder Glyphosate resistent sind.

Unter den als Komponente (B) enthaltenen Safenem werden Verbindungen verstanden, die geeignet sind, phytotoxische Wirkungen von Pflanzenschutzmittelwirkstoffen wie Herbiziden an Kulturpflanzen zu reduzieren.

Die Safener (B) sind ausgewählt aus der Gruppe bestehend aus:
1,8-Naphthalsäureanhydrid,
1-(2-Chlorbenzyl)-3-(1-methyl-1-phenylethyl)harnstoff (Cumyluron),
O,O-Diethyl-O-phenylphosphorotioat (Dietholate),
O,O-Diethyl S-[2-(ethylthio)ethyl]phosphorodithiate (Disulfuton),
4'-Chlor-2,2,2-trifluoracetophenon-O-1,3-dioxolan-2-ylmethyloxim (Fluxofenim),
4,6-Dichlor-2-phenylpyrimidin (Fenclorim),
Benzyl-2-chlor-4-trifluormethyl-1,3-thiazol-5-carboxylat (Flurazole),
N-(4-Methylphenyl)-N'-(1-methyl-1-phenylethyl)hamstoff (Dymron),

Verbindungen von Typ der Acylsulfamoylbenzoesäureamide, der nachfolgenden Formel (VII), die z.B. bekannt sind aus WO 99/16744, 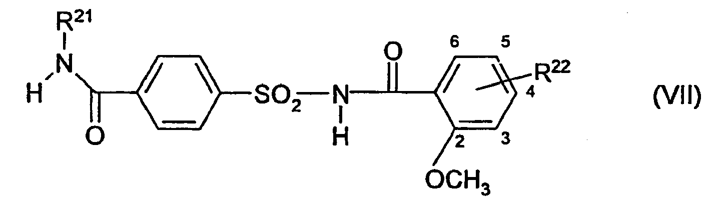 worin R²¹ = Cyclo-Propyl und R²² = H ist (S3-1 = 4-Cyclopopylaminocarbonyl-N-(2-methoxybenzoyl)benzolsulfonamid),

f) Verbindungen vom Typ der N-Acylsulfamoylphenylharnstoffe, die z.B. bekannt sind aus der EP-A-365484, d.h.
1-[4-(N-2-Methoxybenzoylsulfamoyl)phenyl]-3-methylharnstoff,
1-[4-(N-2-Methoxybenzoylsulfamoyl)phenyl]-3,3-dimethythamstoff,
1-[4-(N-4,5-Dimethylbenzoylsulfamoyl)phenyl]-3-methylharnstoff,
einschließlich der Stereoisomeren und der in der Landwirtschaft gebräuchlichen Salze.

Als Safener für die herbiziden Wirkstoffe der Formel (I) geeignet: sind ebenfalls 1-(2,4-Dichlorphenyl)-5-(ethoxycarbonyl)-5-methyl-2-pyrazolin-3-carbonsäureethylester (II-1, Mefenpyr-diethyl), des 5,5-Diphenyl-2-isoxazolin-carbonsäureethylester (II-9, Isoxadifen-ethyl) in der WO-A-95/07897 beschrieben,
(5-Chlor-8-chinolinoxy)essigsäure-(1-methylhexyl)-ester (III-1, Cloquintocet-mexyl),
in der WO-A-2002/34048 beschrieben,
N-N-Diallyl-2,2-dichloracetamid (Dichlormid (IV-1), aus US-A 4,137,070),
4-Dichloracetyl-3-4-dihydro-3-methyl-2H-1,4-benzoxazin (IV-2, Benoxacor, aus EP-0 149 974)
und 3-Dichloracethyl-2-2,5-trimethyloxazolidin (R-29 148, IV-4).

Bevorzugt sind Herbizid-Safener-Kombinationen, enthaltend (A) eine herbizid wirksame Menge an einer oder mehrerer Verbindungen der Formel (I) oder deren Salzen, und (B) eine antidotische wirksame Menge an einem oder mehreren Safenern.

Herbizid wirksame Menge bedeutet im Sinne der Erfindung eine Menge an einem oder mehreren Herbiziden, die geeignet ist, den Pflanzenwuchs negativ zu beeinflussen. Antidotisch wirksame Menge bedeutet im Sinne der Erfindung eine Menge an einem oder mehreren Safenern, die geeignet ist, die phytotoxische Wirkung von Pflanzenschutzmittelwirkstoffen (z.B. von Herbiziden) an Kulturpflanzen zu reduzieren.

Sofern es im einzelnen nicht anders definiert wird, gelten für die Reste in Formel (I) und nachfolgenden Formeln im allgemeinen die folgenden Definitionen.

Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.

Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂CHFCl, CCl₃, CHCl₂, CH₂CH₂Cl. Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.

Ein Kohlenwasserstoffrest kann ein aromatische oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl. Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.

Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pentalenyl und Fluorenyl, besonders bevorzugt Phenyl.

Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.

Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.

Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin.

Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.

Substituierte Reste, wie substituierte Kohlenwasserstoffreste, z.B. substituiertes Alkyl, Alkenyl, Alkinyl, Aryl wie Phenyl und Arylalkyl wie Benzoyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und

Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.
Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, mund p-Methoxyphenyl.

Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestem, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.

Von Formel (I) umfaßt sind auch alle Stereoisomeren, welche die gleiche topologische Verknüpfung der Atome aufweisen, und deren Gemische.

Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Bevorzugte Safener sind (S3-1).
1-[4-(N-2-Methoxybenzoylsulfamoyl)phenyl]-3-methylharnstoff (h-1),
1-[4-(N-2-Methoxybenzoylsulfamoyl)phenyl]-3,3-dimethylharnstoff (h-2),

Besonders bevorzugte Safener sind Dymron (b-14), Fenclorim (b-11), Cumyluron (b-4), Isoxadifen-ethyl (II-9), Mefenpyr-diethyl (II-1), Cloquintocet-mexyl (III-1), S3-1, h-1, h-2, Dietholate (b-7), Disulfoton (b-5), 1,8,Naphthalsäureanhydrid (b-1), Fluxofenim (b-10), Dichlormid (IV-1), Benoxacor (IV-2), Flurazole (b-12), R-29148 (IV-4). Für die Anwendung in Reis besonders bevorzugt sind Dymron, Fenclorim, Cumyluron, Isoxadifen-ethyl. Für die Anwendung in Getreide besonders bevorzugt sind Mefenpyr-diethyl, Cloquintocet-mexyl, in Mais insbesondere Isoxadifen-ethyl, (S3-1), (h-1), (h-2), (h-3), 1,8,Naphthalsäureanhydrid, Fluxofenim, Dichlormid, Benoxacor, Flurazole und R-29148. Für die Anwendung in Zuckerrohr bevorzugt ist Isoxadifen-ethyl.

Beispiele für bevorzugte Kombinationen von herbiziden Wirkstoffen (A) und Safenern (B) sind: (I-1) + (II-1), (I-1) + (II-9), (I-1) + (III-1), (I-1) + (IV-1), (I-1) + (IV-2), (I-1) + (IV-4), (I-1) + (b-1), (I-1) + (b-4), (I-1) + (b-5), (I-1) + (b-7), (I-1) + (b-10), (I-1) + (b-11), (I-1) + (b-12), (I-1) + (b-14), (I-1) + (S3-1), (I-1) + (h-1), (I-1 ) + (h-2).

(I-2) + (II-1), (I-2) + (II-9), (I-2) + (III-1), (I-2) + (IV-1), (I-2) + (IV-2), (I-2) + (IV-4), (I-2) + (b-1), (I-2) + (b-4), (I-2) + (b-5), (I-2) + (b-7), (I-2) + (b-10), (I-2) + (b-11), (I-2) + (b-12), (I-2) + (b-14), (I-2) + (S3-1), (I-2) + (h-1), (I-2) + (h-2).

(I-3) + (II-1), (I-3) + (II-9), (I-3) + (III-1), (I-3) + (IV-1), (I-3) + (IV-2), (I-3) + (IV-4), (I-3) + (b-1), (I-3) + (b-4), (I-3) + (b-5), (I-3) + (b-7), (I-3) + (b-10), (I-3) + (b-11), (I-3) + (b-12), (I-3) + (b-14), (I-3) + (S3-1), (I-3) + (h-1), (I-3) + (h-2).

(I-4) + (II-1), (I-4) + (II-9), (I-4) + (III-1), (I-4) + (IV-1), (I-4) + (IV-2), (I-4) + (IV-4), (I-4) + (b-1), (I-4) + (b-4), (I-4) + (b-5), (I-4) + (b-7), (I-4) + (b-10), (I-4) + (b-11), (I-4) + (b-12), (I-4) + (b-14), (I-4) + (S3-1), (I-4) + (h-1), (1-4) + (h-2).

(I-5) + (II-1), (I-5) + (II-9), (I-5) + (III-1), (I-5) + (IV-1), (I-5) + (IV-2), (I-5) + (IV-4), (I-5) + (b-1), (I-5) + (b-4), (I-5) + (b-5), (I-5) + (b-7), (I-5) + (b-10), (I-5) + (b-11), (I-5) + (b-12), (I-5) + (b-14), (I-5) + (S3-1), (I-5) + (h-1), (I-5) + (h-2).

(I-6) + (II-1), (I-6) + (II-9), (I-6) + (III-1), (I-6) + (IV-1), (I-6) + (IV-2), (I-6) + (IV-4), (I-6) + (b-1), (I-6) + (b-4), (I-6) + (b-5), (I-6) + (b-7), (I-6) + (b-10), (I-6) + (b-11), (I-6) + (b-12), (I-6) + (b-14), (I-6) + (S3-1), (I-6) + (h-1), (I-6) + (h-2). (I-7) + (II-1),

(I-7) + (II-9), (I-7) + (III-1), (I-7) + (IV-1), (I-7) + (IV-2), (I-7) + (IV-4), (I-7) + (b-1), (I-7) + (b-4), (I-7) + (b-5), (I-7) + (b-7), (I-7) + (b-10), (I-7) + (b-11), (I-7) + (b-12), (I-7) + (b-14), (I-7) + (S3-1), (I-7) + (h-1), (I-7) + (h-2).

(I-8) + (II-1), (I-8) + (II-9), (I-8) + (III-1), (I-8) + (IV-1), (I-8) + (IV-2), (I-8) + (IV-4), (I-8) + (b-1), (I-8) + (b-4), (I-8) + (b-5), (I-8) + (b-7), (I-8) + (b-10), (I-8) + (b-11), (I-8) + (b-12), (I-8) + (b-14), (I-8) + (S3-1), (I-8) + (h-1), (I-8) + (h-2).

(I-9) + (II-1), (I-9) + (II-9), (I-9) + (III-1), (I-9) + (IV-1), (I-9) + (IV-2), (I-9) + (IV-4), (I-9) + (b-1), (I-9) + (b-4), (I-9) + (b-5), (I-9) + (b-7), (I-9) + (b-10), (I-9) + (b-11), (I-9) + (b-12), (I-9) + (b-14), (I-9) + (S3-1), (I-9) + (h-1), (I-9) + (h-2).

(I-10) + (II-1), (I-10) + (II-9), (I-10) + (III-1), (I-10) + (IV-1), (I-10) + (IV-2), (I-10) + (IV-4), (I-10) + (b-1), (I-10) + (b-4), (I-10) + (b-5), (I-10) + (b-7), (I-10) + (b-10), (I-10) + (b-11), (I-10) + (b-12), (I-10) + (b-14), (I-10) + (S3-1), (I-10) + (h-1), (I-10) + (h-2).

(I-11) + (II-1), (I-11) + (II-9), (I-11) + (III-1), (I-11) + (IV-1), (I-11) + (IV-2), (I-11) + (IV-4), (I-11) + (b-1), (I-11) + (b-4), (I-11) + (b-5), (I-11) + (b-7), (I-11) + (b-10), (I-11) + (b-11), (I-11) + (b-12), (I-11) + (b-14), (I-11) + (S3-1), (I-11) + (h-1), (I-11) + (h-2).

(I-12) + (II-1), (I-12) + (II-9), (I-12) + (III-1), (I-12) + (IV-1), (I-12) + (IV-2), (I-12) + (IV-4), (I-12) + (b-1), (I-12) + (b-4), (I-12) + (b-5), (I-12) + (b-7), (I-12) + (b-10), (I-12) + (b-11), (I-12) + (b-12), (I-12) + (b-14), (I-12) + (S3-1), (I-12) + (h-1), (I-12) + (h-2).

(I-13) + (II-1), (I-13) + (II-9), (I-13) + (III-1), (I-13) + (IV-1), (I-13) + (IV-2), (I-13) + (IV-4), (I-13) + (b-1), (I-13) + (b-4), (I-13) + (b-5), (I-13) + (b-7), (I-13) + (b-10), (I-13) + (b-11), (I-13) + (b-12), (I-13) + (b-14), (I-13) + (S3-1), (I-13) + (h-1), (I-13) + (h-2).

(I-14) + (II-1), (I-14) + (II-9), (I-14) + (III-1), (I-14) + (IV-1), (I-14) + (IV-2), (I-14) + (IV-4), (I-14) + (b-1), (I-14) + (b-4), (I-14) + (b-5), (I-14) + (b-7), (I-14) + (b-10), (I-14) + (b-11), (I-14) + (b-12), (I-14) + (b-14), (I-14) + (S3-1), (I-14) + (h-1), (I-14) + (h-2).

(I-15) + (II-1), (I-15) + (II-9), (I-15) + (III-1), (I-15) + (IV-1), (I-15) + (IV-2), (I-15) + (IV-4), (I-15) + (b-1), (I-15) + (b-4), (I-15) + (b-5), (I-15) + (b-7), (I-15) + (b-10), (I-15) + (b-11), (I-15) + (b-12), (I-15) + (b-14), (I-15) + (S3-1), (I-15) + (h-1), (I-15) + (h-2).

(I-16) + (II-1), (I-16) + (II-9), (I-16) + (III-1), (I-16) + (IV-1), (I-16) + (IV-2), (I-16) + (IV-4), (I-16) + (b-1), (I-16) + (b-4), (I-16) + (b-5), (I-16) + (b-7), (I-16) + (b-10), (I-16) + (b-11), (I-16) + (b-12), (I-16) + (b-14), (I-16) + (S3-1), (I-16) + (h-1), (I-16) + (h-2).

(I-17) + (II-1), (I-17) + (II-9), (I-17) + (III-1), (I-17) + (IV-1), (I-17) + (IV-2), (I-17) + (IV-4), (I-17) + (b-1), (I-17) + (b-4), (I-17) + (b-5), (I-17) + (b-7), (I-17) + (b-10), (I-17) + (b-11), (I-17) + (b-12), (I-17) + (b-14), (1-17) + (S3-1), (I-17) + (h-1), (I-17) + (h-2).

(I-18) + (II-1), (I-18) + (II-9), (I-18) + (III-1), (I-18) + (IV-1), (I-18) + (IV-2), (I-18) + (IV-4), (I-18) + (b-1), (I-18) + (b-4), (I-18) + (b-5), (I-18) + (b-7), (I-18) + (b-10), (1-18) + (b-11), (I-18) + (b-12), (I-18) + (b-14), (I-18) + (S3-1), (I-18) + (h-1), (I-18) + (h-2).

(I-19) + (II-1), (I-19) + (II-9), (I-19) + (III-1), (I-19) + (IV-1), (I-19) + (IV-2), (I-19) + (IV-4), (I-19) + (b-1), (I-19) + (b-4), (I-19) + (b-5), (I-19) + (b-7), (I-19) + (b-10), (I-19) + (b-11), (I-19) + (b-12), (I-19) + (b-14), (I-19) + (S3-1), (I-19) + (h-1), (I-19) + (h-2).

(I-20) + (II-1), (I-20) + (II-9), (I-20) + (III-1), (I-20) + (IV-1), (I-20) + (IV-2), (I-20) + (IV-4), (I-20) + (b-1), (I-20) + (b-4), (I-20) + (b-5), (I-20) + (b-7), (I-20) + (b-10), (I-20) + (b-11), (I-20) + (b-12), (I-20) + (b-14), (I-20) + (S3-1), (I-20) + (h-1), (I-20) + (h-2).

(I-21) + (II-1), (I-21) + (II-9), (I-21) + (III-1), (I-21) + (IV-1), (I-21) + (IV-2), (I-21) + (IV-4), (I-21) + (b-1), (I-21) + (b-4), (I-21) + (b-5), (I-21) + (b-7), (I-21) + (b-10), (I-21) + (b-11), (I-21) + (b-12), (I-21) + (b-14), (I-21) + (S3-1), (I-21) + (h-1), (I-21) + (h-2).

(I-22) + (II-1), (I-22) + (II-9), (I-22) + (III-1), (I-22) + (IV-1), (I-22) + (IV-2), (I-22) + (IV-4), (I-22) + (b-1), (I-22) + (b-4), (I-22) + (b-5), (I-22) + (b-7), (I-22) + (b-10), (I-22) + (b-11), (I-22) + (b-12), (I-22) + (b-14), (I-22) + (S3-1), (I-22) + (h-1), (I-22) + (h-2).

(I-23) + (11-1), (I-23) + (II-9), (I-23) + (III-1), (I-23) + (IV-1), (I-23) + (IV-2), (I-23) + (IV-4), (I-23) + (b-1), (I-23) + (b-4), (I-23) + (b-5), (I-23) + (b-7), (I-23) + (b-10), (I-23) + (b-11), (I-23) + (b-12), (I-23) + (b-14), (I-23) + (S3-1), (I-23) + (h-1), (I-23) + (h-2).

(I-24) + (II-1), (I-24) + (II-9), (I-24) + (III-1), (I-24) + (IV-1), (I-24) + (IV-2), (I-24) + (IV-4), (I-24) + (b-1), (I-24), + (b-4), (I-24) + (b-5), (I-24) + (b-7), (I-24) + (b-10), (I-24) + (b-11), (I-24) + (b-12), (I-24) + (b-14), (I-24) + (S3-1), (I-24) + (h-1), (I-24) + (h-2).

(I-25) + (II-1), (I-25) + (II-9), (I-25) + (III-1), (I-25) + (IV-1), (I-25) + (IV-2), (I-25) + (IV-4), (I-25) + (b-1), (I-25) + (b-4), (I-25) + (b-5), (I-25) + (b-7), (I-25) + (b-10), (I-25) + (b-11), (I-25) + (b-12), (I-25) + (b-14), (I-25) + (S3-1), (I-25) + (h-1), (I-25) + (h-2).

(I-26) + (II-1), (I-26) + (II-9), (I-26) + (III-1), (I-26) + (IV-1), (I-26) + (IV-2), (I-26) + (IV-4), (I-26) + (b-1), (I-26) + (b-4), (I-26) + (b-5), (I-26) + (b-7), (I-26) + (b-10), (I-26) + (b-11), (I+26) + (b-12), (I-26) + (b-14), (I-26) + (S3-1), (I-26) + (h-1), (I-26) + (h-2).

(I-27) + (II-1), (I-27) + (II-9), (I-27) + (III-1), (I-27) + (IV-1), (I-27) + (IV-2), (I-27) + (IV-4), (I-27) + (b-1), (I-27) + (b-4), (I-27) + (b-5), (I-27) + (b-7), (I-27) + (b-10), (I-27) + (b-11), (I-27) + (b-12), (I-27) + (b-14), (I-27) + (S3-1), (I-27) + (h-1), (I-27) + (h-2).

(I-28) + (II-1), (I-28) + (II-9), (I-28) + (III-1), (I-28) + (IV-1), (I-28) + (IV-2), (I-28) + (IV-4), (I-28) + (b-1), (I-28) + (b-4), (I-28) + (b-5), (I-28) + (b-7), (I-28) + (b-10), (I-28) + (b-11), (I-28) + (b-12), (I-28) + (b-14), (I-28) + (S3-1), (I-28) + (h-1), (I-28) + (h-2).

(I-29) + (II-1), (I-29) + (II-9), (I-29) + (III-1), (I-29) + (IV-1), (I-29) + (IV-2), (I-29) + (IV-4), (I-29) + (b-1), (I-29) + (b-4), (I-29) + (b-5), (I-29) + (b-7), (I-29) + (b-10), (I-29) + (b-11), (I-29) + (b-12), (I-29) + (b-14), (I-29) + (S3-1), (I-29) + (h-1), (I-29) + (h-2).

(I-30) + (II-1), (I-30) + (II-9), (I-30) + (III-1), (I-30), + (IV-1), (I-30) + (IV-2), (I-30) + (IV-4), (I-30) + (b-1), (I-30) + (b-4), (I-30) + (b-5), (I-30) + (b-7), (I-30) + (b-10), (I-30) + (b-11), (1-30) + (b-12), (I-30) + (b-14), (I-30) + (S3-1), (I-30) + (h-1), (I-30) + (h-2).

(I-31) + (II-1), (I-31) + (II-9), (I-31) + (III-1), (I-31) + (IV-1), (I-31) + (IV-2), (I-31) + (IV-4), (I-31) + (b-1), (I-31) + (b-4), (I-31) + (b-5), (I-31) + (b-7), (I-31) + (b-10), (I-31) + (b-11), (I-31) + (b-12), (I-31) + (b-14), (I-31) + (S3-1), (I-31) + (h-1), (I-31) + (h-2).

(I-32) + (II-1), (I-32) + (II-9), (I-32) + (III-1), (I-32) + (IV-1), (I-32) + (IV-2), (I-32) + (IV-4), (I-32) + (b-1), (I-32) + (b-4), (I-32) + (b-5), (I-32) + (b-7), (I-32) + (b-10), (I-32) + (b-11), (I-32) + (b-12), (I-32) + (b-14), (I-32) + (S3-1), (I-32) + (h-1), (I-32) + (h-2).

(I-33) + (II-1), (I-33) + (II-9), (I-33) + (III-1), (I-33) + (IV-1), (I-33) + (IV-2), (I-33) + (IV-4), (I-33) + (b-1), (I-33) + (b-4), (I-33) + (b-5), (I-33) + (b-7), (I-33) + (b-10), (I-33) + (b-11), (I-33) + (b-12), (I-33) + (b-14), (I-33) + (S3-1), (I-33) + (h-1), (I-33) + (h-2).

(I-34) + (II-1), (I-34) + (II-9), (I-34) + (III-1), (I-34) + (I-34) + (IV-1), (I-34) + (IV-2), (I-34) + (IV-4), (I-34) + (b-1), (I-34) + (b-4), (I-34) + (b-5), (I-34) + (b-7), (I-34) + (b-10), (I-34) + (b-11), (I-34) + (b-12), (I-34) + (b-14), (I-34) + (S3-1), (I-34) + (h-1), (I-34) + (h-2).

(I-35) + (II-1), (I-35) + (II-9), (I-35) + (III-1), (I-35) + (IV-1), (I-35) + (IV-2), (I-35) + (IV-4), (I-35) + (b-1), (I-35) + (b-4), (I-35) + (b-5), (I-35) + (b-7), (I-35) + (b-10), (I-35) + (b-11), (I-35) + (b-12), (I-35) + (b-14), (I-35) + (S3-1), (I-35) + (h-1), (I-35) + (h-2).

(I-36) + (II-1), (I-36) + (II-9), (I-36) + (III-1), (I-36) + (IV-1), (I-36) + (IV-2), (I-36) + (IV-4), (I-36) + (b-1), (I-36) + (b-4), (I-36) + (b-5), (I-36) + (b-7), (I-36) + (b-10), (I-36) + (b-11), (I-36) + (b-12), (I-36) + (b-14), (I-36) + (S3-1), (I-36) + (h-1), (I-36) + (h-2).

(I-37) + (II-1), (I-37) + (II-9), (I-37) + (III-1), (I-37) + (IV-1), (I-37) + (IV-2), (I-37) + (IV-4), (I-37) + (b-1), (I-37) + (b-4), (I-37) + (b-5), (I-37) + (b-7), (I-37) + (b-10), (I-37) + (b-11), (I-37) + (b-12), (I-37) + (b-14), (I-37) + (S3-1), (I-37) + (h-1), (I-37) + (h-2).

(I-38) + (II-1), (I-38) + (II-9), (I-38) + (III-1), (I-38) + (IV-1), (I-38) + (IV-2), (I-38) + (IV-4), (I-38) + (b-1), (I-38) + (b-4), (I-38) + (b-5), (I-38) + (b-7), (I-38) + (b-10), (I-38) + (b-11), (I-38) + (b-12), (I-38) + (b-14), (I-38) + (S3-1), (I-38) + (h-1), (I-38) + (h-2).

(I-39) + (II-1), (I-39) + (II-9), (I-39) + (III-1), (I-39) + (IV-1), (I-39) + (IV-2), (I-39) + (IV-4), (I-39) + (b-1), (I-39) + (b-4), (I-39) + (b-5), (I-39) + (b-7), (I-39) + (b-10), (I-39) + (b-11), (I-39) + (b-12), (I-39) + (b-14), (I-39) + (S3-1), (I-39) + (h-1), (I-39) + (h-2).

(I-40) + (II-1), (I-40) + (II-9), (I-40) + (III-1), (I-40) + (IV-1), (I-40) + (IV-2), (I-40) + (IV-4), (I-40) + (b-1), (I-40) + (b-4), (I-40) + (b-5), (I-40) + (b-7), (I-40) + (b-10), (I-40) + (b-11), (I-40) + (b-12), (I-40) + (b-14), (I-40) + (S3-1), (I-40) + (h-1), (I-40) + (h-2).

(I-41) + (II-1), (I-41) + (II-9), (I-41) + (III-1), (I-41) + (IV-1), (I-41) + (IV-2), (I-41) + (IV-4), (I-41) + (b-1), (I-41) + (b-4), (I-41) + (b-5), (I-41) + (b-7), (I-41) + (b-10), (I-41) + (b-11), (I-41) + (b-12), (I-41) + (b-14), (I-41) + (S3-1), (I-41) + (h-1), (I-41) + (h-2).

(I-42) + (II-1), (I-42) + (II-9), (I-42) + (III-1), (I-42) + (IV-1), (I-42) + (IV-2), (I-42) + (IV-4), (I-42) + (b-1), (I-42) + (b-4), (I-42) + (b-5), (I-42) + (b-7), (I-42) + (b-10), (I-42) + (b-11), (I-42) + (b-12), (I-42) + (b-14), (I-42) + (S3-1), (I-42) + (h-1), (I-42) + (h-2).

(I-43) + (II-1), (I-43) + (II-9), (I-43)+(III-1), (I-43) + (IV-1), (I-43) + (IV-2), (I-43) + (IV-4), (I-43) + (b-1), (I-43) + (b-4), (I-43) + (b-5), (I-43) + (b-7), (I-43) + (b-10), (I-43) + (b-11), (I-43) + (b-12), (I-43)+ (b-14), (I-43) + (S3-1), (I-43) + (h-1), (I-43) + (h-2).

(I-44) + (II-1), (I-44) + (II-9), (I-44) + (III-1), (I-44) + (IV-1), (I-44) + (IV-2), (I-44) + (IV-4), (I-44) + (b-1), (I-44) + (b-4), (I-44) + (b-5), (I-44) + (b-7), (I-44) + (b-10), (I-44) + (b-11), (I-44) + (b-12), (I-44) + (b-14), (I-44) + (S3-1), (I-44) + (h-1), (I-44) + (h-2).

(I-45) + (II-1), (I-45) + (II-9), (I-45) + (III-1), (I-45) + (IV-1), (I-45) + (IV-2), (I-45) + (IV-4), (I-45) + (b-1), (I-45) + (b-4), (I-45) + (b-5), (I-45) + (b-7), (I-45) + (b-10), (I-45) + (b-11), (I-45) + (b-12), (I-45) + (b-14), (I-45) + (S3-1), (I-45) + (h-1), (I-45) + (h-2).

(I-46) + (II-1), (1-46) + (II-9), (I-46) + (III-1), (I-46) + (IV-1), (I-46) + (IV-2), (I-46) + (IV-4), (I-46) + (b-1), (I-46) + (b-4), (I-46) + (b-5), (I-46) + (b-7), (I-46) + (b-10), (I-46) + (b-11), (I-46) + (b-12), (I-46) + (b-14), (I-46) + (S3-1), (I-46) + (h-1), (I-46) + (h-2).

(I-47) + (II-1), (I-47) + (II-9), (I-47) + (III-1), (I-47) + (IV-1), (I-47) + (IV-2), (I-47) + (IV-4), (I-47) + (b-1), (I-47) + (b-4), (I-47) + (b-5), (I-47) + (b-7), (I-47) + (b-10), (I-47) + (b-11), (I-47) + (b-12), (I-47) + (b-14), (I-47) + (S3-1), (I-47) + (h-1), (I-47) + (h-2).

(I-48) + (II-1), (I-48) + (II-9), (I-48) + (III-1), (I-48) + (IV-1), (I-48) + (IV-2), (I-48) + (IV-4), (I-48) + (b-1), (I-48) + (b-4), (I-48) + (b-5), (I-48) + (b-7), (I-48) + (b-10), (I-48) + (b-11), (I-48) + (b-12), (I-48) + (b-14), (I-48) + (S3-1), (I-48) + (h-1), (I-48) + (h-2).

(I-49) + (II-1), (I-49) + (II-9), (I-49) + (III-1), (I-49) + (IV-1), (I-49) + (IV-2), (I-49) + (IV-4), (I-49) + (b-1), (I-49) + (b-4), (I-49) + (b-5), (I-49) + (b-7), (I-49) + (b-10), (I-49) + (b-11), (I-49) + (b-12), (I-49) + (b-14), (I-49) + (S3-1), (I-49) + (h-1), (I-49) + (h-2).

(I-50) + (II-1), (I-50) + (II-9), (I-50) + (III-1), (I-50) + (IV-1), (I-50) + (IV-2), (I-50) + (IV-4), (I-50) + (b-1), (I-50) + (b-4), (I-50) + (b-5), (I-50) + (b-7), (I-50) + (b-10), (I-50) + (b-11), (I-50) + (b-12), (I-50) + (b-14), (I-50) + (S3-1), (I-50) + (h-1), (I-50) + (h-2).

(I-51) (II-1), (I-51) + (II-9), (I-51) + (III-1), (I-51) + (IV-1), (I-51) + (IV-2), (I-51) + (IV-4), (I-51) + (b-1), (I-51) + (b-4), (I-51) + (b-5), (I-51) + (b-7), (I-51) + (b-10), (I-51) + (b-11), (I-51) + (b-12), (I-51) + (b-14), (I-51) + (S3-1), (I-51) + (h-1), (I-51) + (h-2).

(I-52) + (II-1), (I-52) + (II-9), (I-52) + (III-1), (I-52) + (IV-1), (I-52) + (IV-2), (I-52) + (IV-4), (I-52) + (b-1), (I-52) + (b-4), (I-52) + (b-5), (I-52) + (b-7), (I-52) + (b-10), (I-52) + (b-11), (I-52) + (b-12), (I-52) + (b-14), (I-52) + (S3-1), (I-52) + (h-1), (I-52) + (h-2).

(I-53)+(II-1), (I-53) + (II-9), (I-53) + (III-1), (I-53) + (IV-1), (I-53) + (IV-2), (I-53) + (IV-4), (I-53) + (b-1), (I-53) + (b-4), (I-53) + (b-5), (I-53) + (b-7), (I-53) + (b-10), (I-53) + (b-11), (I-53) + (b-12), (I-53) + (b-14), (I-53) + (S3-1), (I-53) + (h-1), (I-53) + (h-2).

(I-54) + (II-1), (I-54) + (II-9), (I-54) + (III-1), (I-54) + (IV-1), (I-54) + (IV-2), (I-54) + (IV-4), (I-54) + (b-1), (I-54) + (b-4), (I-54) + (b-5), (I-54) + (b-7), (I-54) + (b-10), (I-54) + (b-11), (I-54) + (b-12), (I-54) + (b-14), (I-54) + (S3-1), (I-54) + (h-1), (I-54) + (h-2).

(I-55) + (II-1), (I-55) + (II-9), (I-55) + (III-1), (I-55) + (IV-1), (I-55) + (IV-2), (I-55) + (IV-4), (I-55) + (b-1), (I-55) + (b-4), (I-55) + (b-5), (I-55) + (b-7), (I-55) + (b-10), (I-55) + (b-11), (I-55) + (b-12), (I-55) + (b-14), (I-55) + (S3-1), (I-55) + (h-1), (I-55)+ (h-2).

(I-56) + (II-1), (I-56) + (II-9), (I-56) + (III-1), (I-56) +(IV-1), (I-56) + (IV-2), (I-56) + (IV-4), (I-56) + (b-1), (I-56) + (b-4), (I-56) + (b-5), (I-56) + (b-7), (I-56) + (b-10), (I-56) + (b-11), (I-56) + (b-12), (I-56) + (b-14), (I-56) + (S3-1), (I-56) + (h-1), (I-56) + (h-2).

(I-57) + (II-1), (I-57) + (II-9), (I-57) + (III-1), (I-57) + (IV-1), (I-57) + (IV-2), (I-57) + (IV-4), (I-57) + (b-1), (I-57) + (b-4), (I-57) + (b-5), (I-57) + (b-7), (I-57) + (b-10), (I-57) + (b-11), (I-57) + (b-12), (I-57) + (b-14), (I-57) + (S3-1), (I-57) + (h-1), (I-57) + (h-2).

(I-58) + (II-1), (I-58) + (II-9), (I-58) + (III-1), (I-58) + (IV-1), (I-58) + (IV-2), (I-58) + (IV-4), (I-58) + (b-1), (I-58) + (b-4), (I-58) + (b-5), (I-58) + (b-7), (I-58) + (b-10), (I-58) + (b-11), (I-58) + (b-12), (I-58) + (b-14), (I-58) + (S3-1), (I-58) + (h-1), (I-58) + (h-2).

(I-59) + (II-1), (I-59) + (II-9), (I-59) + (III-1), (I-59) + (IV-1), (I-59) + (IV-2), (I-59) + (IV-4), (I-59) + (b-1), (I-59) + (b-4), (I-59) + (b-5), (I-59) + (b-7), (I-59) + (b-10), (I-59) + (b-11), (I-59) + (b-12), (I-59) + (b-14), (I-59) + (S3-1), (I-59) + (h-1), (I-59) + (h-2).

(I-60) + (II-1), (I-60) + (II-9), (I-60) + (III-1), (I-60) + (IV-1), (I-60) + (IV-2), (I-60) + (IV-4), (I-60) + (b-1), (I-60) + (b-4), (I-60) + (b-5), (I-60) + (b-7), (I-60) + (b-10), (I-60) + (b-11), (I-60) + (b-12), (I-60) + (b-14), (I-60) + (S3-1), (I-60) + (h-1), (I-60) + (h-2).

(I-61) + (II-1), (I-61) + (II-9), (I-61) + (III-1), (I-61) + (IV-1), (I-61) + (IV-2), (I-61) + (IV-4), (I-61) + (b-1), (I-61) + (b-4), (I-61) + (b-5), (I-61) + (b-7), (I-61) + (b-10), (I-61) + (b-11), (I-61) + (b-12), (I-61) + (b-14), (I-61) + (S3-1), (I-61) + (h-1), (I-61) + (h-2).

(I-62) + (II-1), (I-62) + (II-9), (I-62) + (III-1), (I-62) + (IV-1), (I-62) + (IV-2), (I-62) + (IV-4), (I-62) + (b-1), (I-62) + (b-4), (I-62) + (b-5), (I-62) + (b-7), (I-62) + (b-10), (I-62) + (b-11), (I-62) + (b-12), (I-62) + (b-14), (I-62) + (S3-1), (I-62) + (h-1), (I-62) + (h-2).

(I-63) + (II-1), (I-63) + (II-9), (I-63) + (III-1), (I-63) + (IV-1), (I-63) + (IV-2), (I-63) + (IV-4), (I-63) + (b-1), (I-63) + (b-4), (I-63) + (b-5), (I-63) + (b-7), (I-63) + (b-10), (I-63) + (b-11), (I-63) + (b-12), (I-63) + (b-14), (I-63) + (S3-1), (I-63) + (h-1), (I-63) + (h-2).

(I-64) + (II-1), (I-64) + (II-9), (I-64) + (III-1), (I-64) + (IV-1), (I-64) + (IV-2), (I-64) + (IV-4), (I-64) + (b-1), (I-64) + (b-4), (I-64) + (b-5), (I-64) + (b-7), (I-64) + (b-10), (I-64) + (b-11), (I-64) + (b-12), (I-64) + (b-14), (I-64) + (S3-1), (I-64) + (h-1), (I-64) + (h-2).

(I-65) + (II-1), (I-65) + (II-9), (I-65) + (III-1), (I-65) + (IV-1), (I-65) + (IV-2), (I-65) + (IV-4), (I-65) + (b-1), (I-65) + (b-4), (I-65) + (b-5), (I-65) + (b-7), (I-65) + (b-10), (I-65) + (b-11), (I-65) + (b-12), (I-65) + (b-14), (I-65) + (S3-1), (I-65) + (h-1), (I-65) + (h-2).

(I-66) + (11-1), (I-66) + (II-9), (I-66) + (III-1), (I-66) + (IV-1), (I-66) + (IV-2), (I-66) + (IV-4), (I-66) + (b-1), (I-66) + (b-4), (I-66) + (b-5), (I-66) + (b-7), (I-66) + (b-10), (I-66) + (b-11), (I-66) + (b-12), (I-66) + (b-14), (I-66) + (S3-1), (I-66) + (h-1), (I-66) + (h-2).

(I-67) + (II-1), (I-67) + (II-9), (I-67) + (III-1), (I-67) + (IV-1), (I-67) + (IV-2), (I-67) + (IV-4), (I-67) + (b-1), (I-67) + (b-4), (I-67) + (b-5), (I-67) + (b-7), (I-67) + (b-10), (I-67) + (b-11), (I-67) + (b-12), (I-67) + (b-14), (I-67) + (S3-1), (I-67) + (h-1), (I-67) + (h-2).

(I-68) + (II-1), (I-68) + (II-9), (I-68) + (III-1), (I-68) + (IV-1), (I-68) + (IV-2), (I-68) + (IV-4), (I-68) + (b-1), (I-68) + (b-4), (I-68) + (b-5), (I-68) + (b-7), (I-68) + (b-10), (I-68) + (b-11), (I-68) + (b-12), (I-68) + (b-14), (I-68) + (S3-1), (I-68) + (h-1), (I-68) + (h-2).

(I-69) + (II-1), (I-69) + (II-9), (I-69) + (III-1), (I-69) + (IV-1), (I-69) + (IV-2), (I-69) + (IV-4), (I-69) + (b-1), (I-69) + (b-4), (I-69) + (b-5), (I-69) + (b-7), (I-69) + (b-10), (I-69) + (b-11), (I-69) + (b-12), (I-69) + (b-14), (I-69) + (S3-1), (I-69) + (h-1), (I-69) + (h-2).

(I-70) + (II-1), (I-70) + (II-9), (I-70) + (III-1), (I-70) + (IV-1), (1-70) + (IV-2), (I-70) + (IV-4), (I-70) + (b-1), (I-70) + (b-4), (I-70) + (b-5), (I-70) + (b-7), (I-70) + (b-10), (I-70) + (b-11), (I-70) + (b-12), (I-70) + (b-14), (I-70) + (S3-1), (I-70) + (h-1), (I-70) + (h-2).

(I-71) + (II-1), (I-71) + (II-9), (I-71)+ (III-1), (I-71) + (IV-1), (I-71) + (IV-2), (I-71) + (IV-4), (I-71) + (b-1), (I-71) + (b-4), (I-71) + (b-5), (I-71) + (b-7), (I-71) + (b-10), (I-71) + (b-11), (I-71) + (b-12), (I-71) + (b-14), (I-71) + (S3-1), (I-71) + (h-1), (I-71) + (h-2).

(I-72) + (II-1), (I-72) + (II-9), (I-72) + (III-1), (I-72) + (IV-1), (I-72) + (IV-2), (I-72) + (IV-4), (I-72) + (b-1), (I-72) + (b-4), (I-72) + (b-5), (I-72) + (b-7), (I-72) + (b-10), (I-72) + (b-11), (I-72) + (b-12), (I-72) + (b-14), (I-72) + (S3-1), (I-72) + (h-1), (I-72) + (h-2).

(I-73) + (II-1), (I-73) + (II-9), (I-73) + (III-1), (I-73) + (IV-1), (I-73) + (IV-2), (I-73) + (IV-4), (I-73) + (b-1), (I-73) + (b-4), (I-73) + (b-5), (I-73) + (b-7), (I-73) + (b-10), (I-73) + (b-11), (I-73) + (b-12), (I-73) + (b-14), (I-73) + (S3-1), (I-73) + (h-1), (I-73) + (h-2).

(I-74) + (II-1), (I-74) + (II-9), (I-74) + (III-1), (I-74) + (IV-1), (I-74) + (IV-2), (I-74) + (IV-4), (I-74) + (b-1), (I-74) + (b-4), (I-74) + (b-5), (I-74) + (b-7), (I-74) + (b-10), (I-74) + (b-11), (I-74) + (b-12), (I-74) + (b-14), (I-74) + (S3-1), (I-74) + (h-1), (I-74) + (h-2).

(I-75) + (II-1), (I-75) + (II-9), (I-75) + (III-1), (I-75) + (IV-1), (I-75) + (IV-2), (I-75) + (IV-4), (I-75)+ (b-1), (I-75)+(b-4), (I-75) + (b-5), (I-75) + (b-7), (I-75) + (b-10), (I-75) + (b-11), (I-75) + (b-12), (I-75) + (b-14), (I-75) + (S3-1), (I-75) + (h-1), (I-75) + (h-2).

(I-76) + (II-1), (I-76) + (II-9), (I-76) + (III-1), (I-76) + (IV-1), (I-76) + (IV-2), (I-76) + (IV-4), (I-76) + (b-1), (I-76) + (b-4), (I-76) + (b-5), (I-76) + (b-7), (I-76) + (b-10), (I-76) + (b-11), (I-76) + (b-12), (I-76) + (b-14), (I-76) + (S3-1), (I-76) + (h-1), (I-76) + (h-2).

(I-77) + (II-1), (I-77) + (II-9), (I-77) + (III-1), (I-77) + (IV-1), (I-77) + (IV-2), (I-77) + (IV-4), (I-77) + (b-1), (I-77) + (b-4), (I-77) + (b-5), (I-77) + (b-7), (I-77) + (b-10), (I-77) + (b-11), (I-77) + (b-12), (I-77) + (b-14), (I-77) + (S3-1), (I-77) + (h-1), (I-77) + (h-2).

(I-78) + (II-1), (I-78) + (II-9), (I-78) + (III-1), (I-78) + (IV-1), (I-78) + (IV-2), (I-78) + (IV-4), (I-78) + (b-1), (I-78) + (b-4), (I-78) + (b-5), (I-78) + (b-7), (I-78) + (b-10), (I-78) + (b-11), (I-78) + (b-12), (I-78) + (b-14), (I-78) + (S3-1), (I-78) + (h-1), (I-78) + (h-2).

(I-79) + (II-1), (I-79) + (II-9), (I-79) + (III-1), (I-79) + (IV-1), (I-79) + (IV-2), (I-79) + (IV-4), (I-79) + (b-1), (I-79) + (b-4), (I-79) + (b-5), (I-79) +(b-7), (I-79) + (b-10), (I-79) + (b-11), (I-79) + (b-12), (I-79) + (b-14), (I-79) + (S3-1), (I-79) + (h-1), (I-79) + (h-2).

(I-80) + (II-1), (I-80) + (II-9), (I-80) + (III-1), (I-80) + (IV-1), (I-80) + (IV-2), (I-80) + (IV-4), (I-80) + (b-1), (I-80) + (b-4), (I-80) + (b-5), (I-80) + (b-7), (I-80) + (b-10), (I-80) + (b-11), (I-80) + (b-12), (I-80) + (b-14), (I-80) + (S3-1), (I-80) + (h-1), (I-80) + (h-2).

(I-81) + (II-1), (I-81) + (II-9), (I-81) + (III-1), (I-81) + (IV-1), (I-81) + (IV-2), (I-81) + (IV-4), (I-81) + (b-1), (I-81) + (b-4), (I-81) + (b-5), (I-81) + (b-7), (I-81) + (b-10), (I-81) +(b-11), (I-81) + (b-12), (I-81) + (b-14), (I-81) + (S3-1), (I-81) + (h-1), (I-81) + (h-2).

(I-82) + (II-1), (I-82) + (II-9), (I-82) + (III-1), (I-82) +(IV-1), (I-82) + (IV-2), (I-82) + (IV-4), (I-82) + (b-1), (I-82) + (b-4), (I-82) + (b-5), (I-82) + (b-7), (I-82) + (b-10), (I-82) + (b-11), (I-82) + (b-12), (I-82) + (b-14), (I-82) + (S3-1), (I-82) + (h-1), (I-82) + (h-2).

(I-83) + (II-1), (I-83) + (II-9), (I-83) + (III-1), (I-83) + (IV-1), (I-83) + (IV-2), (I-83) + (IV-4), (I-83) + (b-1), (I-83) + (b-4), (I-83) + (b-5), (I-83) + (b-7), (I-83) + (b-10), (I-83) + (b-11), (I-83) + (b-12), (I-83) + (b-14), (I-83) + (S3-1), (I-83) + (h-1), (I-83) + (h-2).

(I-84) + (11-1), (I-84) + (II-9), (I-84) + (III-1), (I-84) + (IV-1), (I-84) + (IV-2), (I-84) + (IV-4), (I-84) + (b-1), (I-84) + (b-4), (I-84) + (b-5), (I-84) + b-7), (I-84) + (b-10), (I-84) + (b-11), (I-84) + (b-12), (I-84) + (b-14), (I-84) + (S3-1), (I-84) + (h-1), (I-84) + (h-2).

(I-85) + (II-1), (I-85) + (II-9), (I-85) + (III-1), (I-85) + (IV-1), (I-85) +(IV-2), (I-85) + (IV-4), (I-85) + (b-1), (I-85) + (b-4), (I-85) + (b-5), (I-85) + (b-7), (I-85)+ (b-10), (I-85) + (b-11), (I-85) + (b-12), (I-85) + (b-14), (I-85) + (S3-1), (I-85) + (h-1), (I-85) + (h-2).

(I-86) + (II-1), (I-86) + (II-9), (I-86) + (III-1), (I-86) + (IV-1), (I-86) + (IV-2), (I-86) + (IV-4), (I-86) + (b-1), (I-86) + (b-4), (I-86) + (b-5), (I-86) + (b-7), (I-86) + (b-10), (I-86) + (b-11), (I-86) + (b-12), (I-86) + (b-14), (I-86) + (S3-1), (I-86) + (h-1), (I-86) + (h-2).

(I-87) + (II-1), (I-87) + (II-9), (I-87) + (III-1), (I-87) + (IV-1), (I-87) + (IV-2),(I-87) + (IV-4), (I-87) + (b-1), (I-87) + (b-4), (I-87) + (b-5), (I-87) + (b-7), (I-87) + (b-10), (I-87) + (b-11), (I-87) + (b-12), (I-87) + (b-14), (I-87) + (S3-1), (I-87) + (h-1), (I-87) + (h-2).

(I-88) + (II-1), (l-88) + (II-9), (I-88) + (III-1), (I-88) + (IV-1), (I-88) + (IV-2), (I-88) + (IV-4), (I-88) + (b-1), (I-88) + (b-4), (I-88) + (b-5), (I-88) + (b-7), (I-88) + (b-10), (I-88) + (b-11), (I-88) + (b-12), (I-88) + (b-14), (I-88) + (S3-1), (I-88) + (h-1), (I-88) + (h-2).

(I-89) + (II-1), (I-89) + (II-9), (I-89) + (III-1), (I-89)+ (IV-1), (I-89) + (IV-2), (I-89) + (IV-4), (I-89) + (b-1), (I-89) + (b-4), (I-89) + (b-5), (I-89) + (b-7), (I-89) + (b-10), (I-89) + (b-11), (I-89) + (b-12), (I-89) + (b-14), (I-89) + (S3-1), (I-89) + (h-1), (I-89) + (h-2).

(I-90) + (II-1), (I-90) + (II-9), (I-90) + (III-1), (I-90) + (IV-1), (I-90) + (IV-2), (I-90) + (IV-4), (I-90) + (b-1), (I-90) + (b-4), (I-90) + (b-5), (I-90) + (b-7), (I-90) + (b-10), (I-90) + (b-11), (I-90) + (b-12), (I-90) + (b-14), (I-90) + (S3-1), (I-90) + (h-1), (I-90) + (h-2).

(I-91) + (II-1), (I-91) + (II-9), (I-91) + (III-1), (I-91) + (IV-1), (I-91) + (IV-2), (I-91) + (IV-4), (I-91) + (b-1), (I-91) + (b-4), (I-91) + (b-5), (I-91) + (b-7), (I-91) + (b-10), (I-91) + (b-11), (I-91) + (b-12), (I-91) + (b-14), (I-91) + (S3-1), (I-91) + (h-1), (I-91) + (h-2).

(I-92) + (II-1), (I-92) + (II-9), (I-92) + (III-1), (I-92) + (IV-1), (I-92) + (IV-2), (I-94) + (IV-4), (I-92) + (b-1), (I-92) + (b-4), (I-92) + (b-5), (I-92) + (b-7), (I-92) + (b-10), (I-92) + (b-11), (I-92) + (b-12), (I-92) + (b-14), (I-92) + (S3-1), (I-92) + (h-1), (I-92) + (h-2).

(I-93) + (II-1), (I-93) + (II-9), (I-93) + (III-1), (I-93) + (IV-1), (I-93) + (IV-2), (I-93) + (IV-4), (I-93) + (b-1), (I-93) + (b-4), (I-93) + (b-5), (I-93) + (b-7), (I-93) + (b-10), (I-93) + (b-11), (I-93) + (b-12), (I-93) + (b-14), (I-93) + (S3-1), (I-93) + (h-1), (I-93) + (h-2).

(I-94) + (II-1), (I-94) + (II-9), (I-94) + (III-1), (I-94) + (IV-1), (I-94) + (IV-2), (I-94) + (IV-4), (I-94) + (b-1), (I-94) + (b-4), (I-94) + (b-5), (I-94) + (b-7), (I-94) + (b-10), (I-94) + (b-11), (I-94) + (b-12), (I-94) + (b-14), (I-94) + (S3-1), (I-94) + (h-1), (I-94) + (h-2).

(I-95) + (II-1), (I-95) + (II-9), (I-95) + (III-1), (I-95) + (IV-1), (I-95) + (IV-2), (I-95) +(IV-4), (I-95) + (b-1), (I-95) + (b-4), (I-95) + (b-5), (I-95) + (b-7), (I-95) + (b-10), (I-95) + (b-11), (I-95) + (b-12), (I-95) + (b-14), (I-95) + (S3-1), (I-95) + (h-1), (I-95) + (h-2).

(I-96) + (II-1), (I-96) + (II-9), (I-96) + (III-1), (I-96) + (IV-1), (I-96) + (IV-2), (I-96) + (IV-4), (I-96) + (b-1), (I-96) + (b-4), (I-96) + (b-5), (I-96) + (b-7), (I-96) + (b-10), (I-96) + (b-11), (I-96) + (b-12), (I-96) + (b-14), (I-96) + (S3-1), (I-96) + (h-1), (I-96) + (h-2).

(I-97) + (II-1), (I-97) + (II-9), (I-97) + (III-1), (I-97) + (IV-1), (I-97) + (IV-2), (I-97) + (IV-4), (I-97) + (b-1), (I-97) + (b-4), (I-97) + (b-5), (I-97) + (b-7), (I-97) + (b-10), (I-97) + (b-11), (I-97) + (b-12), (I-97) + (b-14), (I-97) + (S3-1), (I-97) + (h-1), (I-97) + (h-2).

(I-98) + (II-1), (I-98) + (II-9), (I-98) + (III-1), (I-98) + (IV-1), (I-98) + (IV-2), (I-98) + (IV-4), (I-98) + (b-1), (I-98) + (b-4), (I-98) + (b-5), (I-98) + (b-7), (I-98) + (b-10), (I-98) + (b-11), (I-98) + (b-12), (I-98) + (b-14), (I-98) + (S3-1), (I-98) + (h-1), (I-98) + (h-2).

(I-99) + (II-1), (I-99) + (II-9), (I-99) + (III-1), (I-99) + (IV-1), (I-99) + (IV-2), (I-99) + (IV-4), (I-99) + (b-1), (I-99) + (b-4), (I-99) + (b-5), (I-99) + (b-7), (I-99) + (b-10), (I-99) + (b-11), (I-99) + (b-12), (I-99) + (b-14), (I-99) + (S3-1), (I-99) + (h-1), (I-99) + (h-2).

(I-100) + (II-1), (I-100) + (II-9), (I-100) + (III-1), (I-100) + (IV-1), (I-100) + (IV-2), (I-100) + (IV-4), (I-100) + (b-1), (I-100) + (b-4), (I-100) + (b-5), (I-100) + (b-7), (I-100) + (b-10), (I-100) + (b-11), (I-100) + (b-12), (I-100) + (b-14), (I-100) + (S3-1), (I-100) + (h-1), (I-100) + (h-2).

(I-101) + (II-1), (I-101) + (II-9), (I-101) + (III-1), (I-101) + (IV-1), (I-101) + (IV-2), (I-101) + (IV-4), (I-101) + (b-1), (I-101) + (b-4), (I-101) + (b-5), (I-101) + (b-7), (I-101) + (b-10), (I-101) + (b-11), (I-101) + (b-12), (I-101) + (b-14), (I-101) + (S3-1), (I-101) + (h-1), (I-101) + (h-2).

(I-102) + (II-1), (I-102) + (II-9), (I-102) + (III-1), (I-102) + (IV-1), (I-102) + (IV-2), (I-102) + (IV-4), (I-102) + (b-1), (I-102) + (b-4), (I-102) + (b-5), (I-102) + (b-7), (I-102) + (b-10), (I-102) + (b-11), (I-102) + (b-12), (I-102) + (b-14), (I-102) + (S3-1), (I-102) + (h-1), (I-102) + (h-2).

(I-103) + (II-1), (I-103) + (II-9), (I-103) + (III-1), (I-103) + (IV-1), (I-103) + (IV-2), (I-103) + (IV-4), (I-103) + (b-1), (I-103) + (b-4), (I-103) + (b-5), (I-103) + (b-7), (I-103) + (b-10), (I-103) + (b-11), (I-103) + (b-12), (I-103) + (b-14), (I-103) + (S3-1), (I-103) + (h-1), (I-103) + (h-2).

(I-104) + (II-1), (I-104) + (II-9), (I-104) + (III-1), (I-104) + (IV-1), (I-104) + (IV-2), (I-104) + (IV-4), (I-104) + (b-1), (I-104) + (b-4), (I-104) + (b-5), (I-104) + (b-7), (I-104) + (b-10), (I-104) + (b-11), (I-104) + (b-12), (I-104) + (b-14), (I-104) + (S3-1), (I-104) + (h-1), (I-104) + (h-2).

(I-105) + (II-1), (I-105) + (II-9), (I-105) + (III-1), (I-105) + (IV-1), (I-105) + (IV-2), (I-105) + (IV-4), (I-105) + (b-1), 105) + (b-4), (I-105) + (b-5), (I-105) + (b-7), (I-105) + (b-10), (I-105) + (b-11), (I-105) + (b-12), (I-105) + (b-14), (I-105) + (S3-1), (I-105) + (h-1), (I-105) + (h-2).

(I-106) + (II-1), (I-106) + (II-9), (I-106) + (III-1), (I-106) + (IV-1), (I-106) + (IV-2), (I-106) + (IV-4); (I-106) + (b-1), (I-106) + (b-4), (I-106) + (b-5), (I-106) + (b-7), (I-106) + (b-10), (I-106) + (b-11), (I-106) + (b-12), (I-106) + (b-14), (I-106) + (S3-1), (I-106) + (h-1), (I-106) + (h-2).

(I-107) + (II-1), (I-107) + (II-9), (I-107) + (III-1), (I-107) + (IV-1), (I-107) + (IV-2), (I-107) + (IV-4), (I-107) + (b-1), (I-107) + (b-4), (I-107) + (b-5), (I-107) + (b-7), (I-107) + (b-10), (I-107) + (b-11), (I-107) + (b-12), (I-107) + (b-14), (I-107) + (S3-1), (I-107) + (h-1), (I-107) + (h-2).

(I-108) + (II-1), (I-108) + (II-9), (I-108) + (III-1), (I-108) + (IV-1), (I-108) + (IV-2), (I-108) + (IV-4), (I-108) + (b-1), (I-108) + (b-4), (I-108) + (b-5), (I-108) + (b-7), (I-108) + (b-10), (I-108) + (b-11), (I-108) + (b-12), (I-108) + (b-14), (I-108) + (S3-1), (I-108) + (h-1), (I-108) + (h-2).

(I-109) + (II-1), (I-109) + (II-9), (I-109) + (III-1), (I-109) + (IV-1), (I-109) + (IV-2), (I-109) + (IV-4), (I-109) + (b-1), (I-109) + (b-4), (I-109) + (b-5), (I-109) + (b-7), (I-109) + (b-10), (I-109) + (b-11), (I-109) + (b-12), (I-109) + (b-14), (I-109) + (S3-1), (I-109) + (h-1), (I-109) + (h-2).

(I-110) + (II-1), (I-10) + (II-9), (I-110) + (III-1), (I-110) + (IV-1), (I-110) + (IV-2), (I-110) + (IV-4), (I-110) + (b-1), (I-110) + (b-4), (I-110) + (b-5), (I-110) + (b-7), (I-110) + (b-10), (I-110) + (b-11), (I-110) + (b-12), (I-110) + (b-14), (I-110) + (S3-1), (I-110) + (h-1), (I-110) + (h-2).

(I-111) + (II-1), (I-111) + (II-9), (I-111) + (III-1), (I-111) + (IV-1), (I-111) + (IV-2), (I-111) + (IV-4), (I-111) + (b-1), (I-111) + (b-4), (I-111) + (b-5), (I-111) + (b-7), (I-111) + (b-10), (I-111) + (b-11), (I-111) + (b-12), (I-111) + (b-14), (I-111) + (S3-1), (I-111) + (h-1), (I-111) + (h-2).

(I-112) + (II-1), (I-112) + (II-9), (I-112) + (III-1), (I-112) + (IV-1), (I-112)+ (IV-2), (I-112) + (IV-4), (I-112) + (b-1), (I-112) + (b-4), (I-112) + (b-5), (I-112) + (b-7), (I-112) + (b-10), (I-112) + (b-11), (I-112) + (b-12), (I-112) + (b-14), (I-112) + (S3-1), (I-112) + (h-1), (I-112) + (h-2).

(I-113) + (II-1), (I-113) + (II-9), (I-113) + (III-1), (I-113) + (IV-1), (I-113) + (IV-2), (I-113) + (IV-4), (I-113) + (b-1), (I-113) + (b-4), (I-113)+ (b-5), (I-113) + (b-7), (I-113) + (b-10), (I-113) + (b-11), (I-113) + (b-12), (I-113) + (b-14), (I-113) + (S3-1), (I-113) + (h-1), (I-113) + (h-2).

(I-114) + (II-1), (I-114) + (II-9), (I-114) + (III-1), (I-114) + (IV-1), (I-114) + (IV-2), (I-114) + (IV-4), (I-114) + (b-1), (I-114) + (b-4), (I-114) + (b-5), (I-114) + (b-7), (I-114) + (b-10), (I-114)+ (b-11), (I-114)+ (b-12), (I-114) + (b-14), (I-114) + (S3-1), (I-114) + (h-1), (I-114) + (h-2).

(I-115) + (II-1), (I-115) + (II-9), (I-115) + (III-1), (I-115) + (IV-1), (I-115) + (IV-2), (I-115) + (IV-4), (I-115) + (b-1), (I-115) + (b-4), (I-115) + (b-5), (I-115) + (b-7), (I-115) + (b-10), (I-115) + (b-11), (I-115) + (b-12), (I-115)+ (b-14), (I-115) + (S3-1), (I-115) + (h-1), (I-115) + (h-2).

(I-116) + (II-1), (I-116) + (II-9), (I-116) + (III-1), (I-116) + (IV-1), (I-116) + (IV-2), (I-116) + (IV-4), (I-116) + (b-1), (I-116) + (b-4), (I-116) + (b-5), (I-116) + (b-7), (I-116) + (b-10), (I-116) + (b-11), (I-116) + (b-12), (I-116) + (b-14), (I-116) + (S3-1), (I-116) + (h-1), (I-116) + (h-2).

(I-117) + (II-1), (I-117) + (II-9), (I-117) + (III-1), (I-117) + (IV-1), (I-117) + (IV-2), (I-117) + (IV-4), (I-117) + (b-1), (I-117) + (b-4), (I-117) + (b-5), (I-117) + (b-7), (I-117) + (b-10), (I-117) + (b-11), (I-117) + (b-12), (I-117) + (b-14), (I-117) + (S3-1), (I-117)+ (h-1), (I-117) + (h-2).

(I-118) + (II-1), (I-118) + (II-9), (I-118) + (III-1), (I-118) + (IV-1), (I-118) + (IV-2), (I-118) + (IV-4), (I-118) + (b-1), (I-118) + (b-4), (I-118) + (b-5), (I-118) + (b-7), (I-118) + (b-10), (I-118) + (b-11), (I-118) + (b-12), (I-118) + (b-14), (I-118) + (S3-1), (I-118) + (h-1), (I-118) + (h-2).

(I-119) + (II-1), (I-119) + (II-9), (I-119) + (III-1), (I-119) + (IV-1), (I-119) + (IV-2), (I-119) + (IV-4), (I-119) + (b-1), (I-119) + (b-4), (I-119) + (b-5), (I-119) + (b-7), (I-119) + (b-10), (I-119) + (b-11), (I-119) + (b-12), (I-119) + (b-14), (I-119) + (S3-1), (I-119) + (h-1), (I-119) + (h-2).

(I-120) + (II-1), (I-120) + (II-9), (I-120) + (III-1), (I-120) + (IV-1), (I-120) + (IV-2), (I-120) + (IV-4), (I-120) + (b-1), (I-120) + (b-4), (I-120) + (b-5), (I-120) + (b-7), (I-120) + (b-10), (I-120) + (b-11), (I-120) + (b-12), (I-120) + (b-14), (I-120) + (S3-1), (I-120) + (h-1), (I-120) + (h-2).

(I-121) + (II-1), (I-121) + (II-9), (I-121) + (III-1), (I-121) + (IV-1), (I-121) + (IV-2), (I-121) + (IV-4), (I-121) + (b-1), (I-121) + (b-4), (I-121) + (b-5), (I-121) + (b-7), (I-121) + (b-10), (I-121) + (b-11), (I-121) + (b-12), (I-121) + (b-14), (I-121) + (S3-1), (I-121) + (h-1), (I-121) + (h-2).

(I-122) + (II-1), (I-122) + (II-9), (I-122) + (III-1), (I-122) + (IV-1), (I-122) + (IV-2), (I-122) + (IV-4), (I-122) + (b-1), (I-122) + (b-4), (I-122) + (b-5), (I-122) + (b-7), (I-122) + (b-10), (I-122) + (b-11), (I-122) + (b-12), (I-122) + (b-14), (I-122) + (S3-1), (I-122) + (h-1), (I-122) + (h-2).

(I-123) + (II-1), (I-123) + (II-9), (I-123) + (III-1), (I-123) + (IV-1), (I-123) + (IV-2), (I-123) + (IV-4), (I-123) + (b-1), (I-123) + (b-4), (I-123) + (b-5), (I-123) + (b-7), (I-123) + (b-10), (I-123) + (b-11), (I-123) + (b-12), (I-123) + (b-14), (I-123) + (S3-1), (I-123) + (h-1), (I-123) + (h-2).

(I-124) + (II-1), (I-124) + (II-9), (I-124) + (III-1), (I-124) + (IV-1), (I-124) + (IV-2), (I-124) + (IV-4), (I-124) + (b-1), (I-124) + (b-4), (I-124) + (b-5), (I-124) + (b-7), (I-124) + (b-10), (I-124) + (b-11), (I-124) + (b-12), (I-124) + (b-14), (I-124) + (S3-1), (I-124) + (h-1), (I-124) + (h-2).

(I-125) + (II-1), (I-125) + (II-9), (I-125) + (III-1), (I-125) + (IV-1), (I-125) + (IV-2), (I-125) + (IV-4), (I-125) + (b-1), (I-125) + (b-4), (I-125) + (b-5), (I-125) + (b-7), (I-125) + (b-10), (I-125) + (b-11), (I-125) + (b-12), (I-125) + (b-14), (I-125) + (S3-1), (I-125) + (h-1), (I-125) + (h-2).

(I-126) + (II-1), (I-126) + (II-9), (I-126) + (III-1), (I-126) + (IV-1), (I-126) + (IV-2), (I-126) + (IV-4), (I-126) + (b-1), (I-126) + (b-4), (I-126) + (b-5), (I-126) + (b-7), (I-126) + (b-10), (I-126) + (b-11), (I-126) + (b-12), (I-126) + (b-14), (I-126) + (S3-1), (I-126) + (h-1), (I-126) + (h-2).

(I-127) + (II-1), (I-127) + (II-9), (I-127) + (III-1), (I-127) + (IV-1), (I-127) + (IV-2), (I-127) + (IV-4), (I-127) + (b-1), (I-127) + (b-4), (I-127) + (b-5), (I-127) + (b-7), (I-127) + (b-10), (I-127) + (b-11), (I-127)+ (b-12), (I-127) + (b-14), (I-127) + (S3-1), (I-127) + (h-1), (I-127) + (h-2).

(I-128) + (II-1), (I-128) + (II-9), (I-128) + (III-1), (I-128) + (IV-1), (I-128) + (IV-2), (I-128) + (IV-4), (I-128) + (b-1), (I-128) + (b-4), (I-128) + (b-5), (I-128) + (b-7), (I-128) + (b-10), (I-128) + (b-11), (I-128) + (b-12), (I-128) + (b-14), (I-128) + (S3-1), (I-128) + (h-1), (I-128) + (h-2).

(I-129) + (II-1), (I-129) + (II-9), (I-129) + (III-1), (I-129) + (IV-1), (I-129) + (IV-2), (I-129) + (IV-4), (I-129) + (b-1), (I-129) + (b-4), (I-129) + (b-5), (I-129) + (b-7), (I-129) + (b-10), (I-129) + (b-11), (I-129) + (b-12), (I-129) + (b-14), (I-129) + (S3-1), (I-129) + (h-1), (I-129) + (h-2).

(I-130) + (II-1), (I-130) + (II-9), (I-30) + (III-1), (I-130) + (IV-1), (I-130) + (IV-2), (I-130) + (IV-4), (I-130) + (b-1), (I-130) + (b-4), (I-130) + (b-5), (I-130) + (b-7), (I-130) + (b-10), (I-130) + (b-11), (I-130) + (b-12), (I-130) + (b-14), (I-130) + (S3-1), (I-130) + (h-1), (I-130) + (h-2).

(I-131) + (II-1), (I-131) + (II-9), (I-131) + (III-1), (I-131) + (IV-1), (I-131) + (IV-2), (I-131) + (IV-4), (I-131) + (b-1), (I-131) + (b-4), (I-131) + (b-5), (I-131) + (b-7), (I-131) + (b-10), (I-131) + (b-11), (I-131) + (b-12), (I-131) + (b-14), (I-131) + (S3-1), (I-131) + (h-1), (I-131) + (h-2).

(I-132) + (II-1), (I-132) + (II-9), (I-132) + (III-1), (I-132) + (IV-1), (I-132) + (IV-2), (I-132) + (IV-4), (I-132) + (b-1), (I-132) + (b-4), (I-132) + (b-5), (I-132) + (b-7), (I-132) + (b-10), (I-132) + (b-11), (I-132) + (b-12), (I-132) + (b-14), (I-132) + (S3-1), (I-132) + (h-1), (I-132) + (h-2).

(I-133) + (II-1), (I-133) + (II-9), (I-133) + (III-1), (I-133) + (IV-1), (I-133) + (IV-2), (I-133) + (IV-4), (I-133) + (b-1), (I-133) + (b-4), (I-133) + (b-5), (I-133) + (b-7), (I-133) + (b-10), (I-133) + (b-11), (I-133) + (b-12), (I-133) + (b-14), (I-133) + (S3-1), (I-133) + (h-1), (I-133) + (h-2).

(I-134) + (II-1), (I-134) + (II-9), (I-134) + (III-1), (I-134) + (IV-1), (I-134) + (IV-2), (I-134) + (IV-4), (I-134) + (b-1), (I-134) + (b-4), (I-134) + (b-5), (I-134) + (b-7), (I-134) + (b-10), (I-134) + (b-11), (I-134) + (b-12), (I-134) + (b-14), (I-134) + (S3-1), (I-134) + (h-1), (I-134) + (h-2).

(I-135) + (II-1), (I-135) + (II-9), (I-135) + (III-1), (I-135) + (IV-1), (I-135) + (IV-2), (I-135) + (IV-4), (I-135) + (b-1), (I-135) + (b-4), (I-135) + (b-5), (I-135) + (b-7), (I-135) + (b-10), (I-135) + (b-11), (I-135) + (b-12), (I-135) + (b-14), (I-135) + (S3-1), (I-135) + (h-1), (I-135) + (h-2).

(I-136) + (II-1), (I-136) + (II-9), (I-136) + (III-1), (I-136) + (IV-1), (I-136) + (IV-2), (I-136) + (IV-4), (I-136) + (b-1), (I-136) + (b-4), (I-136) + (b-5), (I-136) + (b-7), (I-136) + (b-10), (I-136) + (b-11), (I-136) + (b-12), (I-136) + (b-14), (I-136) + (S3-1), (I-136) + (h-1), (I-136) + (h-2).

(I-137) + (II-1), (I-137) + (II-9), (I-137) + (III-1), (I-137) + (IV-1), (I-137) + (IV-2), (I-137) + (IV-4), (I-137) + (b-1), (I-137) + (b-4), (I-137) + (b-5), (I-137) + (b-7), (I-137) + (b-10), (I-137) + (b-11), (I-137) + (b-12), (I-137) + (b-14), (I-137) + (S3-1), (I-137) + (h-1), (I-137) + (h-2).

(I-138) + (II-1), (I-138) + (II-9), (I-138) + (III-1), (I-138) + (IV-1), (I-138) + (IV-2), (I-138) + (IV-4), (I-138) + (b-1), (I-138) + (b-4), (I-138) + (b-5), (I-138) + (b-7), (I-138) + (b-10), (I-138) + (b-11), (I-138) + (b-12), (I-138) + (b-14), (I-138) + (S3-1), (I-138) + (h-1), (I-138) + (h-2).

(I-139) + (11-1), (I-139) + (II-9), (I-139) + (III-1), (I-139) + (IV-1), (I-139) + (IV-2), (I-139) + (IV-4), (I-139) + (b-1), (I-139) + (b-4), (I-139) + (b-5), (I-139) + (b-7), (I-139) + (b-10), (I-139) + (b-11), (I-139) + (b-12), (I-139) + (b-14), (I-139) + (S3-1), (I-139) + (h-1), (I-139) + (h-2).

(I-140) + (II-1), (I-140) + (II-9), (I-140) + (III-1), (I-140) + (IV-1), (I-140) + (IV-2), (I-140) + (I-140) + (b-1), (I-140) + (b-4), (I-140) + (b-5), (I-140) + (b-7), (I-140) + (b-10), (I-140) + (b-11), (I-140) + (b-12), (I-140) + (b-14), (I-140) + (S3-1), (I-140) + (h-1), (I-140) + (h-2).

(I-141) + (II-1), (I-141) + (II-9), (I-141) + (III-1), (I-141) + (IV-1), (I-141) + (IV-2), (I-141) + (IV-4), (I-141) + (b-1), (I-141) + (b-4), (I-141) + (b-5), (I-141) + (b-7), (I-141) + (b-10), (I-141) + (b-11), (I-141) + (b-12), (I-141) + (b-14), (I-141) + (S3-1), (I-141) + (h-1), (I-141) + (h-2).

(I-142) + (II-1), (I-142) + (II-9), (I-142) + (III-1), (I-142) + (IV-1), (I-142) + (IV-2), (I-142) + (IV-4), (I-142) + (b-1), (I-142) + (b-4), (I-142) + (b-5), (I-142) + (b-7), (I-142) + (b-10), (I-142) + (b-11), (I-142) + (b-12), (I-142) + (b-14), (I-142) + (S3-1), (I-142) + (h-1), (I-142) + (h-2).

(I-143) + (II-1), (I-143) + (II-9), (I-143) + (III-1), (I-143) + (IV-1), (I-143) + (IV-2), (I-143) + (IV-4), (I-143) + (b-1), (I-143) + (b-4), (I-143) + (b-5), (I-143) + (b-7), (I-143) + (b-10), (I-143) + (b-11), (I-143) + (b-12), (I-143) + (b-14),(I-143) + (S3-1), (I-143) + (h-1), (I-143) + (h-2).

(I-144) + (II-1), (I-144) + (II-9), (I-144) + (III-1), (I-144) + (IV-1), (I-144) + (IV-2), (I-144) + (IV-4), (I-144) + (b-1), (I-144) + (b-4), (I-144) + (b-5), (I-144) + (b-7), (I-144) + (b-10), (I-144) + (b-11), (I-144) + (b-12), (I-144) + (b-14), (I-144) + (S3-1), (I-144) + (h-1), (I-144) + (h-2).

(I-145) + (II-1), (I-145) + (II-9), (I-145) + (III-1), (I-145) + (IV-1), (I-145) + (IV-2), (I-145) + (IV-4), (I-145) + (b-1), (I-145) + (b-4), (I-145) + (b-5), (I-145) + (b-7), (I-145) + (b-10), (I-145) + (b-11), (I-145) + (b-12), (I-145) + (b-14), (I-145) + (S3-1), (I-145) + (h-1), (I-145) + (h-2).

Die Safener (Antidote) eignen sich zur Reduktion phytotoxischer Effekte, die beim Einsatz von Herbiziden (A) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert z.B. auf Kulturen, in denen bisher ein Einsatz der Herbizide nicht möglich oder nur beschränkt möglich war.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 2,5 kg Wirkstoff je Hektar.

Die herbiziden Wirkstoffe (A) und die Safener (B) können zusammen (z.B. als fertige Formulierung oder im Tank-mix-Verfahren) oder in beliebiger Reihenfolge nacheinander ausgebracht werden, z.B. durch Sprüh-, Gieß- und Spritzanwendung oder durch Granulatstreuung. Das Gewichtsverhältnis Herbizid (A) : Safener (B) kann innerhalb weiter Grenzen variieren und liegt vorzugsweise im Bereich von 1:10000 bis 10000:1, insbesondere von 1:1000 bis 1000:1. Die jeweils optimalen Mengen an Herbizid und Safener sind vom Typ des verwendeten Herbizids und des verwendeten Safeners sowie von der Art und dem Entwicklungsstadium des zu behandelnden Pflanzenbestandes abhängig und lassen sich von Fall zu Fall durch einfache, routinemäßige Vorversuche ermitteln.

Die in der erfindungsgemäßen Herbizid-Safener-Kombination enthaltenen Safener (B) können je nach ihren Eigenschaften zur Vorbehandlung des Saatgutes der Kulturpflanze (z.B. zur Beizung des Saatguts) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche (einschließlich eventuell auf der Anbaufläche befindlichen Wassers, z.B. bei Reisapplikationen) vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

In einer bevorzugten Ausführungsform werden das Saatgut (z.B. Körner, Samen oder vegetative Vermehrungsorgane wie Knollen oder Sprossteile mit Knospen) oder Setzlinge mit den Safenem (B), gegebenenfalls in Kombination mit anderen agrochemischen Wirkstoffen, vorbehandelt. Zur Vorbehandlung des Saatguts können die Wirkstoffe z.B. durch Beizung an das Saatgut gebracht oder die Wirkstoffe und das Saatgut können in Wasser oder andere Lösungsmittel gegeben, und die Wirkstoffe z.B. durch Anlagerung oder Diffusion im Tauchverfahren oder durch Quellen oder Vorkeimen aufgenommen werden. Zur Vorbehandlung von Setzlingen können die jungen Pflanzen z.B. durch Spritzen, Tauchen oder Gießen mit den Safenern, gegebenenfalls in Kombination mit anderen agrochemischen Wirkstoffen, in Kontakt gebracht und anschließend verpflanzt und gegebenenfalls mit den Herbiziden (A) nachbehandelt werden.

Die Saatgut- oder Setzlingsbehandlung kann mit den Safenem (B) alleine oder gemeinsam mit anderen agrochemischen Wirkstoffen - wie Herbiziden, insbesondere den Herbiziden (A), Fungiziden, Insektiziden oder Mitteln zur Pflanzenstärkung, Düngung oder zur Beschleunigung der Quell- und

Keimungsvorgänge - erfolgen. Dabei können die Safener nach der Vorbehandlungsanwendung anschließend nochmals vor, nach oder gemeinsam mit den Herbiziden (A) angewandt werden. Durch die Vorbehandlung des Saatguts oder der Setzlinge kann eine verbesserte Langzeitwirkung der Safener erzielt werden.

Gegenstand der vorliegenden Erfindung ist somit weiterhin ein Verfahren zur Bekämpfung von unerwünschten Pflanzen in Pflanzenkulturen, das dadurch gekennzeichnet ist, daß die Komponenten (A) und (B) der erfindungsgemäßen Herbizid-Safener-Kombination auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können einer oder mehrere Safener (B), vor, nach oder gleichzeitig mit dem oder den Herbizid(en) (A) auf die Pflanzen, das Saatgut oder die Fläche, auf der die Pflanzen wachsen (z.B. die Anbaufläche), appliziert werden. In einer bevorzugten Ausführungsform werden die Safener (B) zur Saatgutbehandlung eingesetzt.

Unter unerwünschten Pflanzen sind alle Pflanzen zu verstehen, die an Orten wachsen, wo sie unerwünscht sind. Dies können z.B. Schadpflanzen (z.B. monoder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Monokotyle Unkräuter entstammen z.B. den Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera. Dikotyle Unkräuter entstammen z.B. den Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Bevorzugt wird in dem erfindungsgemäßen Verfahren eine wirksame Menge der Komponenten (A) und (B) zur Bekämpfung von Schadpflanzen angewendet in Pflanzenkulturen, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen.

Gegenstand der Erfindung ist auch die Verwendung der erfindungsgemäßen Herbizid-Safener-Kombinationen zur Bekämpfung von unerwünschtem Pflanzenwuchs, vorzugsweise in Pflanzenkulturen.

Die erfindungsgemäßen Herbizid-Safener-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der Herbizid-Safener-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die erfindungsgemäße Herbizid-Safener-Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung oder Aminosäurezusammensetzung des Ernteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsekulturen.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung des erfindungsgemäßen herbizid wirksamen Mittels zur Bekämpfung von Schadpflanzen in transgenen Kulturpflanzen oder Kulturpflanzen, die Toleranz durch Selektionszüchtung aufweisen.

Die Herbizide (A) und die Safener (B) können gemeinsam oder getrennt in übliche Formulierungen z.B. zur Sprüh-, Gieß-, Spritz- und Saatgutbeizanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden. Die Formulierungen enthalten im allgemeinen zwischen 0,1 und 95 Gewichtsprozent Wirkstoff, vorzugsweise zwischen 0,5 und 90 Gew.-%.

Die Herbizide (A) und die Safener (B) können als solche oder in ihren Formulierungen auch in Mischung mit anderen agrochemischen Wirkstoffen wie bekannten Herbiziden zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Safenern, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Herbizide (A) und die Safener (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Wirkstoffe können auf die Pflanzen, Pflanzenteile, das Saatgut oder die Anbaufläche (Ackerboden) ausgebracht werden, vorzugsweise auf das Saatgut oder die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der erfindungsgemäßen Kombination an Wirkstoffen (A) und (B) hat den Vorteil der leichteren Anwendbarkeit, weil die Mengen der Komponenten bereits im optimalen Verhältnis zueinander eingestellt werden können. Außerdem können die Hilfsmittel in der Formulierung aufeinander optimal abgestimmt werden.

Als Kombinationspartner für die erfindungsgemäße Herbizid-Safener-Kombination in Mischungsformulierungen oder im Tank-Mix sind beispielsweise bekannte agrochemische Wirkstoffe wie Herbizide, Fungizide oder Insektizide einsetzbar, wie sie in z.B. Weed Research 26, 441-445 (1986), oder "The Pesticide Manual", 13th edition, The British Crop Protection Council, 2003, und dort zitierter Literatur beschrieben sind. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt):
2,4-D, Acetochlor, Acifluorfen, Acifluorfen-sodium, Aclonifen, Alachlor, Alloxydim, Alloxydim-sodium, Ametryn, Amicarbazone, Amidosulfuron, Aminopyralid, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-sodium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquatdibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop-butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinateammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, Iodosulfuron-methyl-natrium, loxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuronethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuronmethyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl und Tritosulfuron.

Zur Anwendung können in handelsüblicher Form vorliegende Formulierungen gegebenenfalls in üblicher Weise verdünnt werden, z.B. mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

### Biologische Beispiele

### 1. Unkrautwirkung im Vorauflauf

Samen bzw. Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten Wirkstoffe (A) und (B) wurden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert.

Nach der Behandlung wurden die Töpfe im Gewächshaus aufgestellt und unter guten Wachstumsbedingungen für die Unkräuter gehalten. Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen die getesteten Herbizid-Safener-Kombinationen eine gute herbizide Vorauflaufwirksamkeit gegen ein breites Spektrum von Ungräsern und Unkräutern auf. Beispielsweise haben die Herbizid-Safener-Kombinationen von Verbindungen Nr. I-1, I-3, I-8, I-9, I-10, I-11, I-12, I-14, I-21, I-22, I-23, I-29, I-30, I-51, I-52, I-60, I-70, I-142, I-143, I-145 und anderen Verbindungen aus Tabelle 1 mit Safenern Dymron (b-14), Fenclorim (b-11), Cumyluron (b-4), Isoxadifen-ethyl (II-9), Mefenpyr-diethyl (II-1), Cloquintocet-mexyl (III-1), S3-1, h-1, h-2, h-3, Dietholate (b-7), Disulfoton (b-5), 1,8,Naphthalsäureanhydrid (b-1), Fluxofenim (b-10), Dichlormid (IV-1), Benoxacor (IV-2), Flurazole (b-12) und R-29148 (IV-4) sehr gute herbizide Wirkung gegen Schadpflanzen wie Sinapis alba, Chrysanthemum segetum, Avena sativa, Stellaria media, Echinochloa crus-galli, Lolium multiflorum, Setaria viridis, Abutilon theophrasti, Amaranthus retroflexus und Panicum miliaceum im Vorauflaufverfahren bei einer Aufwandmenge von 100 g und weniger an Herbizid (A) pro Hektar.

### 2. Unkrautwirkung im Nachauflauf

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im Dreiblattstadium behandelt. Die als Spritzpulver bzw. als Emulsionskonzentrate formulierten erfindungsgemäßen Verbindungen wurden in verschiedenen Dosierungen mit einer Wasseraufwandmenge von umgerechnet 600 bis 800 I/ha auf die grünen Pflanzenteile gesprüht. Nach ca. 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Die erfindungsgemäßen Herbizid-Safener-Kombinationen weisen auch im Nachauflauf eine gute herbizide Wirksamkeit gegen ein breites Spektrum wirtschaftlich wichtiger Ungräser und Unkräuter auf. Beispielsweise haben die Herbizid-Safener-Kombinationen von Verbindungen Nr. I-1, I-3, I-8, I-9, I-10, I-11, I-12, I-14, I-21, I-22, I-23, I-29, I-30, I-51, I-52, I-60, I-70, I-142, I-143, I-145 und anderen Verbindungen aus Tabelle 1 mit Safenem Dymron (b-14), Fenclorim (b-11), Cumyluron (b-4), Isoxadifen-ethyl (II-9), Mefenpyr-diethyl (II-1), Cloquintocet-mexyl (III-1), S3-1, h-1, h-2, h-3, Dietholate (b-7), Disulfoton (b-5), 1,8,Naphthalsäureanhydrid (b-1), Fluxofenim (b-10), Dichlormid (IV-1), Benoxacor (IV-2), Flurazole (b-12) und R-29148 (IV-4) sehr gute herbizide Wirkung gegen Schadpflanzen wie Sinapis alba, Echinochloa crus-galli, Lolium multiflorum, Chrysanthemum segetum, Setaria viridis, Abutilon theophrasti, Amaranthus retroflexus, Panicum miliaceum und Avena sativa im Nachauflaufverfahren bei einer Aufwandmenge von 100 g und weniger an Herbizid (A) pro Hektar.

### 3. Kulturpflanzenverträglichkeit

In weiteren Versuchen im Gewächshaus wurden Samen einer größeren Anzahl von Kulturpflanzen und Unkräutern in sandigem Lehmboden ausgelegt und mit Erde abgedeckt. Ein Teil der Töpfe wurde sofort wie unter Abschnitt 1 beschrieben behandelt, die übrigen im Gewächshaus aufgestellt, bis die Pflanzen zwei bis drei echte Blätter entwickelt haben und dann wie unter Abschnitt 2 beschrieben mit den erfindungsgemäßen Herbizid-Safener-Kombinationen in unterschiedlichen Dosierungen besprüht. Vier bis fünf Wochen nach der Applikation und Standzeit im Gewächshaus wurde mittels optischer Bonitur festgestellt, daß die getesteten Herbizid-Safener-Kombinationen, beispielsweise von Verbindungen Nr. I-1, I-3, I-8, I-9, I-10, I-11, I-12, I-14, I-21, I-22, I-23, I-29, I-30, I-51, I-52, 1-60, I-70, I-142, I-143, I-145 und anderen Verbindungen aus Tabelle 1 mit Safenem Dymron (b-14), Fenclorim (b-11), Cumyluron (b-4), Isoxadifen-ethyl (II-9), Mefenpyr-diethyl (II-1), Cloquintocet-mexyl (III-1), S3-1, h-1, h-2, h-3, Dietholate (b-7), Disulfoton (b-5), 1,8,Naphthalsäureanhydrid (b-1), Fluxofenim (b-10), Dichlormid (IV-1), Benoxacor (IV-2), Flurazole (b-12) und R-29148 (IV-4) Pflanzenkulturen wie Baumwolle, Raps, Zuckerrüben sowie Gramineen-Kulturen wie Gerste, Weizen, Roggen, Hirsen, Mais oder Reis im Vor- und Nachauflaufverfahren ungeschädigt ließen. Beispielsweise werden Mais-Kulturen bei Anwendung einer Kombination von 30 g/ha von Verbindung (I-9) mit 100 g Isoxadifen-ethyl (II-9) nicht geschädigt.

## Patentansprüche

1. Herbizid-Safener-Kombination, enthaltend
(A) eine oder mehrere Verbindungen der Formel (I) oder deren Salze 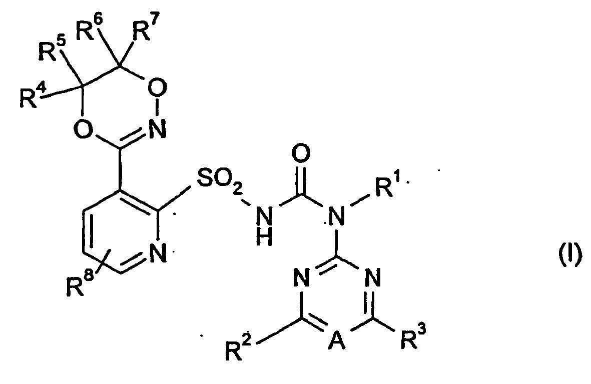 worin
A für Stickstoff oder eine CR¹¹-Gruppierung steht,
wobei
R¹¹ für Wasserstoff, Alkyl, Halogen und Haloalkyl steht,
R¹ für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R⁴ - R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxy-carbonyl, Alkylaminocarbonyl mit jeweils 1 bis 3 Kohlenstoffatomen stehen,
R⁸ für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können; und
(B) einen oder mehrere Safener ausgewählt aus der Gruppe bestehend aus: Dymron (b-14), Fenclorim (b-11), Cumyluron (b-4), Isoxadifen-ethyl (II-9), Mefenpyr-diethyl (II-1), Cloquintocet-mexyl (III-1), 4-Cyclopopylaminocarbonyl-N-(2-methoxybenzoyl)benzolsulfonamid (S3-1), 1-[4-(N-2-Methoxybenzoylsulfamoyl)phenyl]-3-methylharnstoff (h-1), 1-[4-(N-2-Methoxybenzoylsulfamoyl)phenyl]-3,3-dimethylharnstoff (h-2), 1-[4-(N-4,5-Dimethylbenzoylsulfamoyl)phenyl]-3-methylharnstoff (h-3), Dietholate (b-7), Disulfoton (b-5), 1,8,Naphthalsäureanhydrid (b-1), Fluxofenim (b-10), Dichlormid (IV-1), Benoxacor (IV-2), Flurazole (b-12), R-29148 (IV-4).

2. Herbizid-Safener-Kombination gemäß Anspruch 1, zusätzlich enthaltend einen oder mehrere weitere agrochemische Wirkstoffe und/oder im Pflanzenschutz übliche Zusatzstoffe und Formulierungshilfsmittel.

3. Verfahren zur Bekämpfung von unerwünschten Pflanzen, vorzugsweise in Pflanzenkulturen, worin die Komponenten (A) und (B) der Herbizid-Safener Kombination gemäß einem oder mehreren der Ansprüche 1 bis 2, gemeinsam oder getrennt appliziert werden, vorzugsweise auf die Pflanzen, das Saatgut oder die Fläche, auf der die Pflanzen wachsen.

4. Verfahren gemäß Anspruch 3, **dadurch gekennzeichnet, daß** die Pflanzenkulturen aus der Gruppe der Ackerbaukulturen, Gemüsekulturen oder Dauer- und Plantagenkulturen stammen.

5. Verfahren gemäß Anspruch 3 oder 4, **dadurch gekennzeichnet, daß** die Pflanzenkufturen transgen sind oder Toleranz durch Selektionszüchtung aufweisen.

6. Verwendung einer Herbizid-Safener-Kombination definiert gemäß einem oder mehreren der Ansprüche 1 bis 2, zur Bekämpfung von Schadpflanzen, vorzugsweise in Pflanzenkulturen.

## Claims

1. A herbicide-safener combination, comprising
(A) one or more compounds of the formula (I) or salts thereof 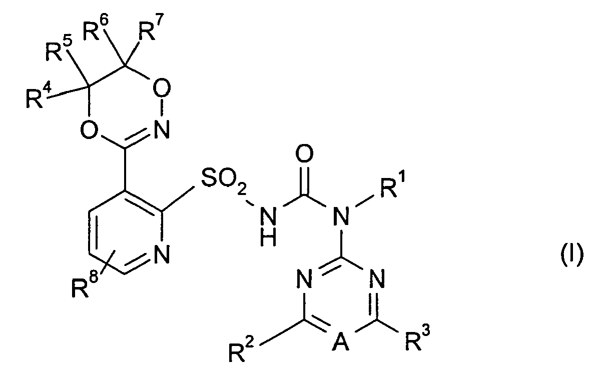 in which
A is nitrogen or a CR¹¹ grouping,
where
R¹¹ is hydrogen, alkyl, halogen and haloalkyl,
R¹ is hydrogen or an optionally substituted radical from the group consisting of alkyl, alkoxy, alkoxyalkyl, alkenyl, akynyl, cycloalkyl, cycloalkylalkyl, aralkyl and aryl,
R² is hydrogen, halogen or in each case optionally halogen-substituted alkyl, alkoxy, alkylthio, alkylamino or dialkylamino having in each case 1 to 6 carbon atoms,
R³ is hydrogen, halogen or in each case optionally halogen-substituted alkyl, alkoxy, alkylthio, alkylamino or dialkylamino having in each case 1 to 6 carbon atoms,
R⁴-R⁷ independently of one another are hydrogen, halogen, cyano, thiocyanato or in each case optionally halogen-substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
R⁸ is hydrogen, halogen, cyano, thiocyanato or in each case optionally halogen-substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
where in the radicals mentioned above the alkyl and alkylene groups may in each case contain 1 to 6 carbon atoms, the alkenyl and alkynyl groups may in each case contain 2 to 6 carbon atoms, the cycloalkyl groups may in each case contain 3 to 6 carbon atoms and the aryl groups may in each case contain 6 or 10 carbon atoms; and
(B) one or more safeners selected from the group consisting of: dymron (b-14), fenclorim (b-11), cumyluron (b-4), isoxadifen-ethyl (II-9), mefenpyr-diethyl (II-1), cloquintocet-mexyl (III-1), 4-cyclopropylaminocarbonyl-N-(2-methoxybenzoyl)benzenesulfonamide (S3-1), 1-[4-(N-2-methoxybenzoylsulfamoyl)phenyl]-3-methylurea (h-1), 1-[4-(N-2-methoxybenzoylsulfamoyl)phenyl]-3,3-dimethylurea (h-2), 1-[4-(N-4,5-dimethyl-benzoylsulfamoyl)phenyl]-3-methylurea (h-3), dietholate (b-7), disulfoton (b-5), 1,8-naphthalic anhydride (b-1), fluxofenim (b-10), dichlormid (IV-1), benoxacor (IV-2), flurazole (b-12), R-29148 (IV-4).

2. The herbicide-safener combination as claimed in claim 1, additionally comprising one or more further agrochemically active compounds and/or additives and formulation auxiliaries customary in crop protection.

3. A method for controlling unwanted plants, preferably in crop plants, in which the components (A) and (B) of the herbicide-safener combination as claimed in one or more of claims 1 to 2 are applied together or separately, preferably to the plants, the seed or the area on which the plants grow.

4. The method as claimed in claim 3, wherein the crop plants are from the group of the farm crops, vegetable crops or permanent crops and plantation crops.

5. The method as claimed in claim 3 or 4, wherein the crop plants are transgenic or tolerant owing to selection breeding.

6. The use of a herbicide-safener combination as defined in one or more of claims 1 to 2 for controlling harmful plants, preferably in crop plants.

## Revendications

1. Combinaison herbicide-agent phytoprotecteur, contenant
(A) un ou plusieurs composés de formule (I) ou leurs sels, 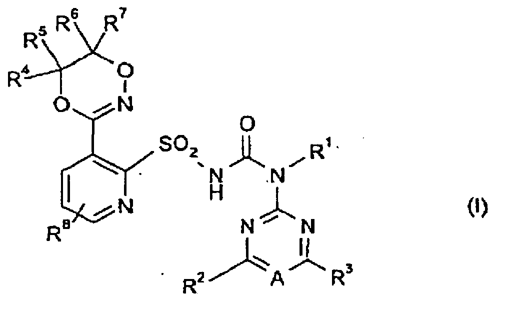 formule dans laquelle
A représente l'azote ou un groupement CR¹¹,
R¹¹ représentant l'hydrogène, un reste alkyle, un halogène et un reste halogénalkyle,
R¹ représente l'hydrogène ou un reste éventuellement substitué choisi dans la série des restes alkyle, alkoxy, alkoxyalkyle, alcényle, alcynyle, cycloalkyle, cycloalkylalkyle, aralkyle et aryle,
R² représente l'hydrogène, un halogène ou un reste alkyle, alkoxy, alkylthio, alkylamino ou dialkylamino ayant chacun 1 à 6 atomes de carbone et chacun étant éventuellement substitué par un halogène,
R³ représente l'hydrogène, un halogène ou un reste alkyle, alkoxy, alkylthio, alkylamino ou dialkylamino ayant chacun 1 à 6 atomes de carbone et chacun étant éventuellement substitué par un halogène,
R⁴-R⁷ représentent, indépendamment les uns des autres, l'hydrogène, un halogène, un groupe cyano, thiocyanato ou un reste alkyle, alkoxy, alkylthio, alkylsulfinyle, alkylsulfonyle, alkylamino, alkylcarbonyle, alkoxycarbonyle, alkylaminocarbonyle ayant chacun 1 à 3 atomes de carbone, et chacun étant éventuellement substitué par un halogène,
R⁸ représente l'hydrogène, un halogène, un groupe cyano, thiocyanato ou un reste alkyle, alkoxy, alkylthio, alkylsulfinyle, alkylsulfonyle, alkylamino, alkyl-carbonyle, alkoxycarbonyle, alkylaminocarbonyle ayant chacun 1 à 3 atomes de carbone, et chacun étant éventuellement substitué par un halogène, les groupes alkyle et alkylène pouvant avoir chacun 1 à 6 atomes de carbone, les groupes alcényle et alcynyle chacun 2 à 6 atomes de carbone, les groupes cycloalkyle chacun 3 à 6 atomes de carbone et les groupes aryle chacun 6 ou 10 atomes de carbone dans les restes mentionnés ci-dessus; et
(B) un ou plusieurs agents phytoprotecteurs choisis dans le groupe constitué de : dymron (b-14), fenclorim (b-11), cumyluron (b-4), isoxadifène-éthyl (II-9), méfenpyr-diéthyl (II-1), cloquintocet-mexyl (III-1), 4-cyclopropylaminocarbonyl-N-(2-méthoxybenzoyl)-benzènesulfonamide (S3-1), 1-[4-(N-2-méthoxybenzoylsulfamoyl)phényl]-3-méthylurée (h-1), 1-[4-(N-2-méthoxybenzoylsulfamoyl)phényl]-3,3-diméthylurée (h-2), 1-[4-(N-4,5-diméthylbenzoylsulfamoyl)phényl]-3-méthylurée (h-3), diétholate (b-7), disulfoton (b-5), anhydride d'acide 1,8-naphtalique (b-1), fluxofénim (b-10), dichlormide (IV-1), bénoxacor (IV-2), flurazole (b-12), R-29148 (IV-4).

2. Combinaison herbicide-agent phytoprotecteur suivant la revendication 1, contenant en outre une ou plusieurs autres substances actives agrochimiques et/ou des additifs et agents auxiliaires de formulation d'emploi courant dans la protection des plantes.

3. Procédé de lutte contre des plantes indésirables, avantageusement dans des cultures de plantes, dans lequel les composants (A) et (B) de la combinaison herbicide-agent phytoprotecteur selon l'une des revendications 1 et 2 ou les deux sont appliqués, ensemble ou séparément, avantageusement aux plantes, aux semences ou à l'aire sur laquelle les plantes croissent.

4. Procédé suivant la revendication 3, **caractérisé en ce que** les cultures de plantes sont choisies dans le groupe des cultures en terre arable, des cultures de plantes potagères, des cultures permanentes et des plantations.

5. Procédé suivant la revendication 3 ou 4, **caractérisé en ce que** les cultures de plantes sont transgéniques ou ont acquis une tolérance par sélection.

6. Utilisation d'une combinaison herbicide-agent phytoprotecteur telle que définie dans l'une des revendications 1 et 2 ou les deux pour lutter contre des plantes parasites, avantageusement dans des cultures de plantes.
